# EUROPÄISCHE PATENTSCHRIFT

(11) **EP 3 977 844 B1**
(45) Veröffentlichungstag und Bekanntmachung des Hinweises auf die Patenterteilung: **25.12.2024**
(21) Anmeldenummer: 21189109.8
(22) Anmeldetag: 02.08.2021
(51) Int. Cl.: A01F 29/22, A01D 43/08, A01F 29/09

(54) **FELDHÄCKSLER MIT EINER STELLVORRICHTUNG ZUR SPALTEINSTELLUNG ZWISCHEN GEGENSCHNEIDE UND HÄCKSELMESSERN**
FORAGE HARVESTER COMPRISING ACTUATING MEANS FOR ADJUSTING THE CLEARANCE BETWEEN THE COUNTER BLADE AND THE CHOPPER KNIVES
RAMASSEUSE-HACHEUSE COMPRENANT DES MOYENS DE RÉGLAGE POUR AJUSTER LE JEU ENTRE LA CONTRE-LAME ET LES COUTEAUX DE BROYAGE

(30) Priorität: 30.09.2020 DE 102020125513
(43) Veröffentlichungstag der Anmeldung: 06.04.2022
(73) Patentinhaber: CLAAS Saulgau GmbH, 88348 Bad Saulgau (DE)
(72) Erfinder: Wehner, Gregor, 88356 Ostrach Unterweiler (DE); Harsch, Sebastian, 88348 Bad Saulgau (DE)

(56) Entgegenhaltungen:
- EP-A1- 1 072 185
- EP-A1- 2 559 334
- DE-A1- 102011 005 317
- DE-A1- 102017 117 966
- DE-A1- 102017 201 423

## Beschreibung

Die vorliegende Erfindung betrifft einen Feldhäcksler gemäß dem Oberbegriff des Anspruches 1. Weiterhin betrifft die vorliegende Erfindung ein Verfahren zum Betreiben eines Feldhäckslers, insbesondere zum Einstellen eines Spaltmaßes zwischen einer Gegenschneide und Häckselmessern einer Häckselvorrichtung des Feldhäckslers.

Feldhäcksler der eingangs genannten Art umfassen eine Häckselvorrichtung mit einer Messertrommel mit daran angeordneten Häckselmessern, wobei die Messertrommel abschnittsweise von einem Trommelgehäuse umgeben ist. Weiterhin umfasst die Häckselvorrichtung eine mit den Häckselmessern zusammenwirkende Gegenschneide, die an einem Gegenschneidenträger lösbar befestigt ist. Die Gegenschneide ist mittels einer eine Steuervorrichtung und mindestens einen Aktor aufweisenden Stellvorrichtung auf die Häckselmesser zustellbar, wodurch ein Spaltmaß zwischen der Gegenschneide und den Häckselmessern eingestellt wird. Ein der Messertrommel zugeführtes Erntegut wird durch das Zusammenwirken der Häckselmesser und der Gegenschneide gehäckselt.

Während des Häckselbetriebs kommt es insbesondere zu einem verschleißbedingten Abtrag im Bereich der Schneidkanten der Häckselmesser, was zu einer Herabsetzung von Schnittqualität und Erntegutdurchsatz führt. Hinzu kommt, dass auch die Gegenschneide einem Verschleiß unterliegt, was die Herabsetzung von Schnittqualität und Erntegutdurchsatz verstärkt. Durch den Verschleiß an den Häckselmessern sowie der Gegenschneide ergibt sich einerseits eine Änderung der Schneidengeometrien der Häckselmesser und andererseits eine Vergrößerung des Eingriffsspalts zwischen Häckselmessern und Gegenschneide. Die Schneidengeometrie der Häckselmesser lässt sich durch ein Nachschleifen der Häckselmesser wiederherstellen, während der Eingriffsspalt zwischen Häckselmesser und Gegenschneide regelmäßig durch ein Zustellen der Gegenschneide nachgeführt werden kann. Beide Maßnahmen lassen sich bei heutigen Feldhäckslern automatisch und ohne Werkstattaufenthalt vornehmen. Bei der Zustellung der Gegenschneide besteht die Herausforderung darin, den jeweiligen Betrag der Zustellung optimal zu bestimmen. Dies stellt insoweit eine besondere Herausforderung dar, als, wie oben angedeutet, sowohl die Häckselmesser als auch die Gegenschneide einem Verschleiß unterliegen.

Aus der DE 10 2017 117 966 A1 ist es bekannt, zur Einstellung der an einem Gegenschneidenträger lösbar befestigten Gegenschneide Messdaten von zwei Klopfsensoren und zwei berührungslos arbeitenden Abstandssensoren auszuwerten. Die Klopfsensoren überwachen während des Vorgangs der Zustellung der Gegenschneide, ob eine Berührung zwischen der Gegenschneide und einem Häckselmesser auftritt. Mittels der beiden Abstandssensoren wird ein vorgegebenes Spaltmaß für den Eingriffsspalt eingestellt. Die Klopfsensoren und die Abstandssensoren sind jeweils paarweise endseitig auf dem Gegenschneidenträger befestigt. Mittels der Abstandssensoren wird der Abstand zwischen dem Gegenschneidenträger und den Häckselmessern bestimmt. Dabei erfolgt die Ansteuerung der Aktoren zur Einstellung des Eingriffsspaltes anhand eines Geometrieparameters, der basierend auf den Sensordaten der Klopfsensoren kalibriert wird.

Die DE 100 26 296 C2 beschreibt ebenfalls einen Feldhäcksler der eingangs genannten Art. Die Bestimmung des Spaltmaßes zwischen der Gegenschneide und den Häckselmessern erfolgt dabei durch eine direkte oder indirekte Messung. Bei einer direkten Messung werden Klopfsensoren verwendet, während für eine indirekte berührungslose Messung die Länge einer Funkenüberschlagstrecke zwischen den Häckselmessern und der Gegenschneide bestimmt wird, wobei diese Bauteile elektrisch voneinander isoliert sind und sich unter Einschaltung einer Hochspannungsquelle als Pole im Abstand des Eingriffsspaltes gegenüberstehen. Insbesondere letztere Ausführungsform ist aus Gründen des erforderlichen Aufwands als auch aufgrund von Sicherheitsaspekten nicht zweckmäßig.

Aus DE 10 2011 005 317 A1 ist ein Messsystem zur Ermittlung des Verschleißzustandes von Häckselmessern bekannt.

EP 1 072 185 A1 offenbart eine Einstellvorrichtung für den Schneidspalt an Häckslern mit einer einen elektrischen Stromfluss auswertenden Einrichtung.

Aus EP 2 559 334 A1 ist ein Verfahren und eine Vorrichtung zur Zustandserkennung einer Schneideinrichtung bekannt.

DE 10 2017 201 423 A1 offenbart eine Anordnung zur Erkennung des Verschleißgrades von Häckselmessern einer Häckseltrommel eines Feldhäckslers.

Ausgehend von dem vorstehend genannten Stand der Technik liegt der Erfindung die Aufgabe zugrunde, einen Feldhäcksler der eingangs genannten Art derart weiterzubilden, dass dieser sich durch eine vereinfachte und verbesserte Bestimmung des Spaltmaßes auszeichnet.

Diese Aufgabe wird bei einem selbstfahrenden Feldhäcksler gemäß dem Oberbegriff von Anspruch 1 durch die Merkmale des kennzeichnenden Teils des Anspruches 1 gelöst. Vorteilhafte Weiterbildungen sind Gegenstand der Unteransprüche.

Gemäß dem Anspruch 1 wird ein Feldhäcksler vorgeschlagen, der eine Häckselvorrichtung mit einer Messertrommel mit daran angeordneten Häckselmessern umfasst, wobei die Messertrommel abschnittsweise von einem Trommelgehäuse umgeben ist, sowie mit einer mit den Häckselmessern zusammenwirkenden Gegenschneide, die an einem Gegenschneidenträger lösbar befestigt ist, wobei die Gegenschneide mittels einer eine Steuervorrichtung und mindestens einen Aktor aufweisenden Stellvorrichtung auf die Häckselmesser zustellbar ist, wodurch ein Spaltmaß zwischen der Gegenschneide und den Häckselmessern eingestellt wird. Erfindungsgemäß ist vorgesehen, dass die Stellvorrichtung zumindest einen Abstandssensor zur Detektion eines Abstands zwischen der Gegenschneide und dem Trommelgehäuse umfasst. Hierbei ist der zumindest eine Abstandssensor zur Bestimmung der Position des Gegenschneidenträgers relativ zum Trommelgehäuse eingerichtet. Die Steuervorrichtung steht mit dem zumindest einen Sensor durch ein drahtloses oder drahtgebundenes Kommunikationsmittel in Verbindung. Die Steuervorrichtung ist zur Auswertung der Sensordaten des zumindest einen Abstandssensors eingerichtet.

Erfindungsgemäß arbeitet der zumindest eine Abstandssensor berührend oder berührungslos und ist Bestimmung der Position des Gegenschneidenträgers relativ zum Trommelgehäuse eingerichtet.

Vorteilhaft ist, dass mittels zumindest eines, insbesondere berührungslos arbeitenden, Abstandssensors Sensordaten kontinuierlich auch während des Arbeitsprozesses generiert werden, wodurch eine fortlaufende Überwachung des Spaltmaßes erreichbar ist. Bevorzugt kann der zumindest eine Abstandssensor zur Bestimmung einer absoluten Position entlang eines Messweges eingerichtet sein. Der zumindest eine Abstandssensor ist insbesondere als Absolutwertsensor ausgeführt.

Der zumindest eine Abstandssensor umfasst zumindest zwei Sensorkomponenten, wobei eine Sensorkomponente an dem Trommelgehäuse angeordnet und die weitere Sensorkomponente dem Gegenschneidenträger zugeordnet ist. Bevorzugt kann es sich bei dem zumindest einen Abstandssensor um einen Magnetbandsensor handeln. Besonders bevorzugt sind zwei Abstandssensoren vorgesehen. Dabei umfasst der Magnetbandsensor einen Lesekopf und ein Magnetband. Hierbei können sich im Lesekopf magnetoresistive Sensoren bzw. Hall-Sensoren befinden.

Dabei kann der Gegenschneidenträger an achsparallel zur Rotationsachse der Messertrommel angeordneten Schwenklagern schwenkbar gelagert sein, wobei sich an den Gegenschneidenträger endseitig zwei einander gegenüberliegende Hebelarme anschließen, die sich im Wesentlichen in vertikaler Richtung zum Gegenschneidenträger erstrecken. Hierbei kann der Gegenschneidenträger durch die Anordnung der Schwenklager an einer Basis schwenkbar gelagert sein, wobei die Basis ortsfest an dem Trommelgehäuse angeordnet ist.

Vorzugsweise kann die weitere Sensorkomponente an dem zur am Trommelgehäuse angeordneten Sensorkomponente benachbarten Hebelarm oder an dem benachbarten Schwenklager angeordnet sein. Durch diese Anordnung liegen die Sensorkomponenten des zumindest einen Abstandssensors im Wesentlich abseits des der Häckselvorrichtung zugeführten Erntegutstroms. Besonders bevorzugt ist an dem jeweiligen Hebelarm die eine Sensorkomponente des Abstandssensors angeordnet und an der jeweiligen Außenseite des Trommelgehäuses die korrespondierende weitere Sensorkomponente. Vorzugsweise ist bei einer Ausführung des zumindest einen Abstandssensors als Magnetbandsensor der Lesekopf an dem Trommelgehäuse befestigt, während das Magnetband an dem Hebelarm oder dem Schwenklager angeordnet ist.

Gemäß einer bevorzugten Weiterbildung kann der zumindest eine Abstandssensor zumindest eine Schutzeinrichtung aufweisen, welche zumindest eine der Sensorkomponenten zumindest abschnittsweise umschließt. Auf diese Weise kann einer Verschmutzung oder einem Verschleiß durch Staubablagerungen, die während eines Schleifvorganges von Häckselmessern und Gegenschneide erzeugt werden, begegnet werden.

Insbesondere kann die Schutzeinrichtung als eine Ummantelung oder eine Einhausung aus einem Kunststoff ausgeführt sein. Die als eine Ummantelung oder eine Einhausung ausgeführte Schutzeinrichtung kann bei einem berührungslos arbeitenden Abstandssensor die als Magnetband ausgeführt Sensorkomponente, insbesondere vollständig, ummanteln.

Alternativ oder zusätzlich kann die Schutzeinrichtung als ein Rahmenelement oder eine Bürste ausgeführt sein. Die als Rahmenelement oder Bürste ausgeführte Schutzeinrichtung umschließt den zumindest einen Abstandssensor bzw. dessen Sensorkomponenten abschnittsweise, so dass das Eindringen von Schleifstaub verhindert oder zumindest reduziert werden kann.

Gemäß einer bevorzugten Weiterbildung kann dem zumindest einen Abstandssensor eine Reinigungsvorrichtung zugeordnet sein, die dazu eingerichtet ist, die Sensorkomponenten im Wesentlichen von bei einem Schleifvorgang erzeugten Staub freizuhalten. Auf diese Weise kann Schleifstaub, der sich an dem zumindest einen Abstandssensor, insbesondere trotz Vorhandensein einer Schutzeinrichtung, ablagert, entfernt werden, beispielsweise durch Abblasen oder Absaugen.

Hierbei kann die Steuervorrichtung dazu eingerichtet sein, die Reinigungsvorrichtung in Abhängigkeit von zumindest einem Parameter automatisch anzusteuern, um durch einen Schleifvorgang erzeugten Staub zu entfernen. Ein möglicher Parameter kann das Ergebnis einer durch die Steuervorrichtung durchführbaren Plausibilitätsprüfung der von dem zumindest einen Abstandssensor generierten Sensorwerte sein. Denkbar ist aber auch, dass die Reinigungsvorrichtung an die Ausführung des Schleifvorgangs gekoppelt, vor, während und/oder nach einem Schleifvorgang, angesteuert wird, um den Staub zu entfernen.

Weiterhin kann die Steuervorrichtung eine Eingabe-Ausgabe-Einheit umfassen, die zur Vorgabe eines Wertes für das einzuhaltende Spaltmaß eingerichtet ist, welches durch den zumindest einen erfindungsgemäß angeordneten Abstandssensor überprüfbar ist. Insbesondere kann das vorzugebende einzuhaltende Spaltmaß anhand von in der Steuervorrichtung hinterlegten spezifischen Werten, insbesondere im µm-Bereich, ausgewählt und anschließend überprüft werden.

Bevorzugt kann die Steuervorrichtung eine Recheneinheit und eine Speichereinheit umfassen, in der zumindest zwei auswählbare Einstellverfahren zur automatischen Ausführung eines Einstellvorgangs zur Einstellung der Gegenschneide hinterlegt sind, die durch die Recheneinheit ausgeführt werden. Ein Bediener kann mittels einer Eingabe-Ausgabeeinheit, die mit der Steuervorrichtung verbunden ist, das Ausführen des Einstellvorganges initiieren, welcher von der Steuervorrichtung automatisch ausgeführt wird.

Dabei können als auswählbare Einstellverfahren ein Verfahren "Schnell", ein Verfahren "Genau", ein Verfahren "Verschleißoptimierung" und/oder ein Verfahren "Manuell" in der Speichereinheit hinterlegt sein. Hierzu kann die Steuervorrichtung dazu eingerichtet sein, im Einstellverfahren "Genau" die Stellvorrichtung anzusteuern, dass sich ein kleinstmögliches paralleles Spaltmaß zwischen der Gegenschneide und der Messertrommel einstellt, welches auf einer Vorgabe, insbesondere durch einen Bediener oder die Steuervorrichtung beruht. Bei Letzterem kann in der Steuervorrichtung zumindest ein Wert für das Spaltmaß als Vorgabe abrufbar hinterlegt sein.

Weiterhin kann die Steuervorrichtung dazu eingerichtet sein, im Einstellverfahren "Schnell" die Stellvorrichtung anzusteuern, dass sich an einen Nachschleifvorgang der Häckselmesser und/oder der Gegenschneide, insbesondere unmittelbar, ein vereinfachter Einstellvorgang anschließt, wobei während des vereinfachten Einstellvorgangs eine Annäherung der Gegenschneide an die Messertrommel bis zu einer ersten Berührung eines Häckselmessers erfolgt, um daraufhin den Abstand zwischen der Gegenschneide und den Häckselmessern auf ein vordefiniertes, insbesondere durch den Bediener vorgegebenes, Spaltmaß durch die Ansteuerung der Stellvorrichtung einzustellen. Die Detektion einer Berührung der Gegenschneide mit einem der Häckselmesser der Messertrommel kann durch zumindest einen Klopfsensor erfolgen.

Des Weiteren kann die Steuervorrichtung dazu eingerichtet sein, im Einstellverfahren "Manuell" die Stellvorrichtung anzusteuern, dass eine manuelle Einstellung der Gegenschneide mittels einer Lehre oder eines Werkzeugs durchführbar ist.

Gemäß dem Einstellverfahren "Schnell" steht die Kompensation des Verschleißes an der Gegenschneide durch einen Nachschleifvorgang im Vordergrund, an den sich ein vereinfachter Einstellvorgang anschließt. Dabei sieht der vereinfachte Einstellvorgang eine Annäherung der Gegenschneide an die Messertrommel bis zu einer ersten Berührung eines Häckselmessers vor, um daraufhin den Abstand zwischen der Gegenschneide und den Häckselmessern auf ein vordefiniertes, beispielsweise durch den Bediener vorgegebenes, Spaltmaß durch die Ansteuerung des zumindest einen Aktors der Stellvorrichtung einzustellen. Das Berühren von Gegenschneide und Häckselmessern wird durch zumindest einen Klopfsensor, vorzugsweise mehrere Klopfsensoren, detektiert, der oder die vorzugsweise auf dem Gegenschneidenträger angeordnet sind. Bevorzugt ist nur eine begrenzte Anzahl an Wiederholungen des auswählbaren Einstellverfahrens "Schnell" vorgesehen. Hierdurch soll vermieden werden, dass die Einstellgenauigkeit abnimmt. Gemäß dem Einstellverfahren "Genau" ist vorgesehen, dass sich der durchzuführende Einstellvorgang durch eine hohe Präzision auszeichnet und damit einer längeren Durchführungsdauer bedarf. Dabei wird im Einstellverfahren "Genau" ein kleinstmögliches paralleles Spaltmaß zwischen der Gegenschneide und der Messertrommel eingestellt, welches auf einer Vorgabe durch den Bediener oder die Steuervorrichtung beruht. Der Einstellvorgang im Einstellverfahren "Genau" umfasst dabei ein beidseitiges Antasten der Gegenschneide an die äußeren Abschnitte der Messertrommel, bis jeweils eine Berührung mit einem der Häckselmesser detektiert wird. Hierdurch können Geometrieabweichungen an der Messertrommel respektive den Häckselmessern und/oder der Gegenschneide, die beispielsweise auf Verschleiß oder eine Beschädigung durch einen Fremdkörper zurückzuführen sind, berücksichtigt werden, indem beim anschließenden Parallelstellen der Gegenschneide zur Einstellung des kleinstmöglichen Spaltmaßes diese Geometrieabweichungen ausgemittelt werden. Das Einstellverfahren "Verschleißoptimierung" zeichnet sich dadurch aus, dass ein auftretender Verschleiß der Häckselmesser und/oder der Gegenschneide hinsichtlich seiner Quantität durch eine Auswertung des Nachstellweges bestimmt wird. Überschreitet der Verschleiß einen vorgebbaren Schwellwert, kann durch die Steuervorrichtung ein Hinweis an den Bediener generiert werde, die Intervalle für die Durchführung des Nachschleifvorgangs und/oder der Einstellverfahren "Schnell" oder "Genau" zu verkürzen. Der Hinweis kann dem Bediener bevorzugt durch die Eingabe-Ausgabeeinheit in der Kabine des Feldhäckslers zur Kenntnis gebracht werden. Das Einstellverfahren "Manuell" ermöglicht es dem Bediener, die Gegenschneide mittels eines geeigneten Werkzeugs, wie einer Lehre, manuell einzustellen. Letzteres Einstellverfahren stellt eine mögliche Option dar, wenn aufgrund einer Störung an der Stellvorrichtung die automatischen Ausführung der Einstellverfahren "Schnell" und "Genau" nicht möglich ist.

Weiterhin kann die Steuervorrichtung dazu eingerichtet sein, eine Voreinstellung der Gegenschneide in Abhängigkeit von der Erntegutart und/oder der Durchführung eines Vorsatzgerätewechsels durchzuführen. Hierbei können in der Speichereinheit der Steuervorrichtung für verschiedene Erntegutarten Sollwerte für das Spaltmaß hinterlegt sein. Wird beispielsweise durch eine Bedienereingabe über die Eingabe-Ausgabeeinheit eine Änderung der Erntegutart eingestellt, wird ein zuvor durch den Bediener manuell eingestellter Wert für das Spaltmaß auf den hinterlegten, erntegutspezifischen Wert übersteuert. Diese Übersteuerung erfolgt auch bei einem Wechsel des Vorsatzgerätes, dessen Durchführung gleichfalls durch eine Bedienereingabe über die Eingabe-Ausgabeeinheit an die Steuervorrichtung übermittelbar ist. Alternativ kann ein Wechsel der Erntegutart und/oder des Vorsatzgerätes beispielsweise durch eine an dem Feldhäcksler Sensoreinrichtung detektiert werden.

Weiterhin kann die Steuervorrichtung dazu eingerichtet sein, die Bestimmung der Position des Gegenschneidenträgers fortlaufend im laufenden Erntebetrieb durchzuführen. Somit lässt sich beispielsweise die Funktion einer jeweiligen Bremsvorrichtung an den Hebelarmen der Stellvorrichtung überwachen. Eine ungewollte Bewegung der Gegenschneide kann somit erfasst werden, die auf ein Lösen einer oder beider Bremsvorrichtungen an den Hebelarmen zurückzuführen ist. Ebenso kann der Sitz der Gegenschneide überwacht werden. Ein weiterer Aspekt kann darin besteht, dass eine Lageänderung der Gegenschneide relativ zum Gegenschneidenträger aufgrund von Fremdkörpern erfasst werden kann.

Bevorzugt kann die Steuervorrichtung dazu eingerichtet sein, in Abhängigkeit von der im laufenden Erntebetrieb bestimmten Position des Gegenschneidenträgers eine auszuführende Maßnahme abzuleiten. Eine Änderung der Position aufgrund einer Bewegung des Gegenschneidenträgers relativ zur Messertrommel, verursacht durch äußere Einflüsse, über einen Grenzwert hinaus, löst eine Maßnahme aus, um die Häckselmesser sowie die Gegenschneide vor Beschädigungen zu schützen oder eine Minderung der Häckselqualität zu vermeiden.

Hierbei kann die auszuführende Maßnahme eine Ausgabe eines Warnhinweises oder das Stoppen der Messertrommel sein. Eine ungewollte Bewegung des Gegenschneidenträgers in Richtung der Messertrommel oder von dieser weg, führt beim Überschreiten des Grenzwertes zumindest zu einem Warnhinweis, der von einem optisch-akustisch Signalgeber ausgegeben werden kann. Dabei kann es sich vorzugsweise um eine Ausgabe durch die Eingabe-Ausgabeeinheit handeln. Zumindest kann ein optischer Warnhinweis durch die Eingabe-Ausgabeeinheit ausgegeben werden. Insbesondere bei einer ungewollten Bewegung des Gegenschneidenträgers in Richtung der Messertrommel kann ein Überschreiten des Grenzwertes das Stoppen der Messertrommel und/oder das Ansteuern der Stellvorrichtung zur Folge haben, um die Gegenschneide zur Messertrommel zu beabstanden.

Weiter bevorzugt kann die Steuervorrichtung dazu eingerichtet sein, nach einem Neustart zumindest der Häckselvorrichtung, insbesondere des Hauptantriebstranges des Feldhäckslers, mittels des zumindest einen Abstandssensors eine Abweichung vom letztmalig vor dem Neustart eingestellten Wert für das Spaltmaß zu bestimmen und auszugeben. Auf diese Weise können unerwünschte Verschiebungen festgestellt werden. Zudem kann die Steuervorrichtung dazu eingerichtet sein, einen Hinweis auf eine festgestellte Verschiebung ausgeben. Insbesondere kann dieser Hinweis mit einer Handlungsanweisung verbunden sein, die Gegenschneide nach einem der Einstellverfahren "Schnell" oder "Genau" neu einzustellen.

Weiter bevorzugt kann die Steuervorrichtung dazu eingerichtet sein, nach einem Wechsel eines Vorsatzgerätes zur Aufnahme von Erntegut eine Veränderung des Abstands zwischen Häckseltrommel und Gegenschneide gegenüber einem vor dem Wechsel bestimmten Abstand zu detektieren und bei Detektion einer Abstandsänderung eine Maßnahme abzuleiten. Hierbei kann es sich bei einer abzuleitenden Maßnahme um einen auszugebenden Warnhinweis oder eine auszugebende Handlungsanweisung handeln.

So kann die Maßnahme eine Ausgabe eines Warnhinweises und/oder das Durchführen eines Einstellvorganges der Gegenschneide sein. Diese Maßnahmen können vorzugsweise automatisch von der Steuervorrichtung durchgeführt werden.

Bevorzugt kann die Steuervorrichtung dazu eingerichtet sein, in Abhängigkeit von einem zurückgelegten Verstellweg des Gegenschneidenträgers Verschleißdaten der Häckselmesser und/oder der Gegenschneide zu bestimmen und auszugeben. Dabei wird der während des jeweiligen Einstellvorgangs zurückgelegte Verstellweg erfasst und aufsummiert. Ein Überschreiten eines vorgebbaren Grenzwertes für einen Gesamtstellweg führt dazu, dass die Steuervorrichtung mittels der Eingabe-Ausgabeeinheit einen Hinweis ausgibt, dass das Ende der Nutzungsdauer der Häckselmesser und/oder der Gegenschneide erreicht ist. Dies soll dazu dienen, den Bediener auf das Ende der Nutzungsdauer zumindest der Gegenschneide hinzuweisen. Insbesondere kann anhand des während eines Einstellvorganges zurückgelegten Verstellweges des Gegenschneide der Trommelradius, d.h. der Hüllradius der Häckselmesser, automatisch durch die Steuervorrichtung berechnet werden, wodurch der Messerzustand automatisch ermittelt wird.

Insbesondere kann die Steuervorrichtung dazu eingerichtet sein, Verschleißkosten zu bestimmen und auszugeben. Die Ausgabe erfolgt auf dem Feldhäcksler über die Eingabe-Ausgabeeinheit und/oder eine externe, mit der Steuervorrichtung kommunizierende Datenverarbeitungseinrichtung. Dabei kann es sich bei der externen Datenverarbeitungseinrichtung beispielsweise um ein Backendsystem für eine Farmmanagementsoftware oder ein Mobilfunkgerät, ein sogenanntes Smartphone, handeln.

In einer bevorzugten Ausführung kann die Steuervorrichtung dazu eingerichtet sein, im Rahmen der automatischen Ausführung eines Einstellvorgangs eine Geometrieabweichung, insbesondere Balligkeit, der Form der Gegenschneide oder der Häckselmesserform zu bestimmen, die einen hierfür vorgesehenen Schwellwert überschreitet. Hierzu kann die Steuervorrichtung die Aktoren der Stellvorrichtung in der Weise ansteuern, dass zunächst auf einer Außenseite ein Antasten der Gegenschneide an die Messertrommel entlang eines Verstellweges stattfindet, bis es zu einem Kontakt kommt, und der Verstellweg anschließend vollständig zurückgefahren wird, und im Anschluss daran das Antasten auf der gegenüberliegenden Außenseite und das Zurückfahren durchgeführt wird. Im Anschluss daran kann anhand des jeweils zurückgelegten Verstellweges auf der jeweiligen Außenseite der Messertrommel eine Parallelstellung der Gegenschneide durch Ausmittlung bestimmt und die Gegenschneide bis zu einem Kontakt mit der Messertrommel zugestellt werden. Die Steuervorrichtung kann aufgrund der Auswertung der Verstellwege beim Antasten auf den beiden Außenseiten der Messertrommel sowie dem Auswerten des Verstellweges bei dem anschließenden parallelen Zustellen einen Vergleich mit einem in der Speichereinheit der Steuervorrichtung hinterlegten Schwellwert für die maximale Differenz der Verstellwege durchführen und gegebenenfalls eine auszuführende Maßnahme ableiten.

Bei einem erstmaligen Auftreten des Passierens des Grenzwertes kann von der Steuervorrichtung über die Eingabe-Ausgabeeinheit der Hinweis ausgegeben werden, dass die Nachschleifintervalle zu kürzen sind. Zudem kann automatisch ein Nachschleifvorgang und ein anschließender Einstellvorgang durch die Steuervorrichtung initiiert werden. Im Anschluss an den jeweils automatisch ausgeführten Nachschleifvorgang und Einstellvorgang kann vorgesehen sein, zu überprüfen, ob nach deren Durchführung weiterhin eine Geometrieabweichung vorliegt.

Gemäß einer bevorzugten Weiterbildung kann die Steuervorrichtung dazu eingerichtet sein, einen Austausch von Häckselmessern und/oder Gegenschneide und/oder eine manuelle Veränderung der Einstellung des Spaltmaßes und/oder der Anordnung von Häckselmessern und/oder Gegenschneide zu bestimmen. Hierzu kann eine Veränderung des Spaltmaßes bei Inbetriebnahme des Feldhäckslers detektiert werden, indem die Signale des zumindest einen Abstandssensors gegenüber einem zuvor abgespeicherten Wert für ein Spaltmaß auf eine Positionsänderung des Gegenschneidhalters relativ zum Trommelgehäuse schließen lassen. Wird dabei ein vorgebbarer oder ein vorgegebener Differenzwert zwischen dem zuletzt während des Erntebetriebs bestimmten Spaltmaß und dem Spaltmaß nach erneuter Inbetriebnahme überschritten, wird dem Bediener signalisiert, dass die Gegenschneide nicht oder inkorrekt eingestellt ist. Die Steuervorrichtung kann dazu eingerichtet sein, dem Bediener des Feldhäckslers einen Hinweis zukommen zu lassen, dass die Gegenschneide nicht oder inkorrekt eingestellt ist und dass ein Einstellvorgang durchzuführen ist.

Bevorzug kann die Steuervorrichtung dazu eingerichtet sein, die Gegenschneide automatisch in eine Parkstellung und/oder eine Kalibrierstellung zu überführen. Mittels der Eingabe-Ausgabeeinheit kann der Bediener einen Steuerbefehl auslösen und an die Steuervorrichtung übertragen, um die Gegenschneide durch eine Ansteuerung des zumindest einen Aktors in die Parkstellung und/oder eine Kalibrierstellung zu überführen. In der Parkstellung und/oder der Kalibrierstellung nimmt die Gegenschneide eine definierte Position absolut zum Trommelgehäuse ein. In der Parkposition kann die Gegenschneide durch das Aufschwenken des Einzugsgehäuses zugänglich gemacht werden. Somit lässt sich beispielsweise die Gegenschneide nach einer Demontage wegen eines fruchtartbedingten oder verschleißbedingten Wechsels oder einem Drehen auf dem Gegenschneidenträger bezüglich eines Referenzpunktes am Trommelgehäuse ausrichten. Die Ausrichtung der Gegenschneide bezüglich des Referenzpunktes am Trommelgehäuse kann mittels einer Lehre erfolgen.

Nach einer weiteren Lehre gemäß dem Anspruch 26, welchem eigenständige Bedeutung zukommt, wird ein Verfahren zum Betreiben eines Feldhäckslers beansprucht. Auf alle Ausführungen zu dem vorschlagsgemäßen Feldhäcksler darf verwiesen werden. Insbesondere ist das Verfahren zum Betreiben eines Feldhäckslers gemäß den Ansprüchen 1 bis 25 vorgesehen.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in einer Seitenansicht;
- Fig. 2: eine schematische und perspektivische Darstellung eines Trommelgehäuses;
- Fig. 3: eine Detailansicht des Trommelgehäuses gemäß Fig. 2;
- Fig. 4: die Detailansicht des Trommelgehäuses gemäß Fig. 3 von schräg hinten;
- Fig. 5: exemplarisch ein Ablaufdiagramm eines Einstellvorgangs für eine Gegenschneide; und
- Fig. 6: exemplarisch ein Ablaufdiagramm bei einer Detektion einer Geometrieabweichung von Gegenschneide und/oder Messertrommel während des Einstellvorgangs.

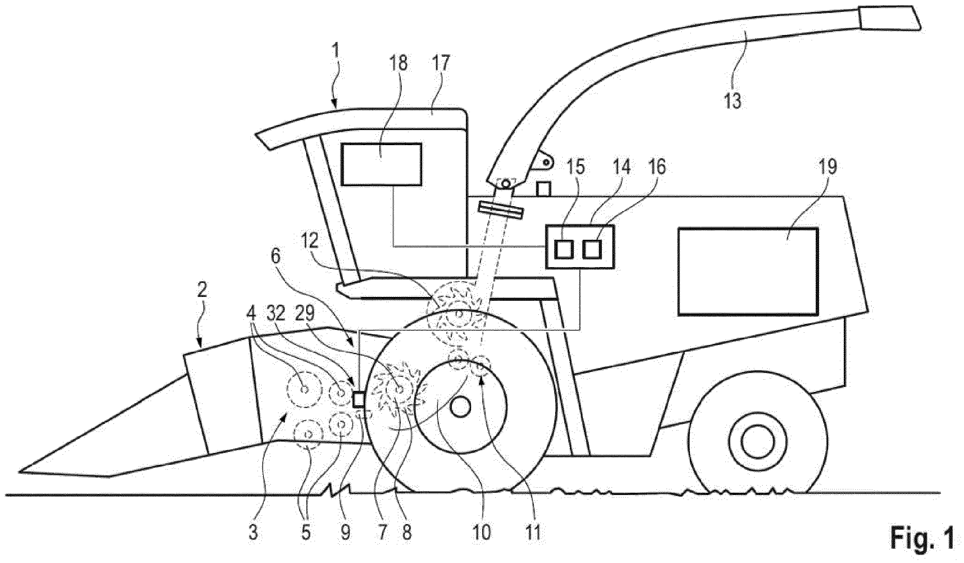

In Fig. 1 ist ein selbstfahrender Feldhäcksler 1 in einer Seitenansicht schematisch dargestellt, der mit einem Vorsatzgerät 2 versehen ist. In der Fig. 1 ist als Vorsatzgerät 2 ein Maispflücker schematisch angedeutet, es können jedoch auch andere Vorsatzgeräte wie beispielsweise eine Pickup an den Feldhäcksler 1 angebaut sein. Das Vorsatzgerät 2 nimmt das Erntegut vom Feld auf und fördert es einer Einzugsvorrichtung 3 zu, die im Ausführungsbeispiel aus einer Walzengruppe mit oberen und unteren Einzugswalzen 4, 5 besteht. Die Einzugswalzen 4, 5 der Einzugsvorrichtung 3 üben eine Presskraft auf das aufgenommene Erntegut aus. Die Einzugsvorrichtung 3 fördert das zu einer Erntegutmatte verdichtete Erntegut einer Häckselvorrichtung 6 zu, welche eine um eine Rotationsachse 29 rotierend angetriebene Messertrommel 7 mit über deren Umfang verteilt angeordneten Häckselmessern 8 aufweist. Die Häckselmesser 8 schneiden die von der Einzugsvorrichtung 3 zugeführte Erntegutmatte an einer Gegenschneide 9. Das geschnittene bzw. gehäckselte Erntegut wird durch die Rotationsbewegung der Messertrommel 7 in einen nachgeordneten Auswurfschacht 10 geschleudert, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleuniger 12 zusätzlich beschleunigt durch einen Auswurfkrümmer 13 in ein mitgeführtes Transportfahrzeug gefördert wird.

Zum Antreiben der Arbeitsaggregate des Feldhäckslers 1, d.h. Vorsatzgerät 2, Einzugsvorrichtung 3, Häckselvorrichtung 6 sowie Nachbeschleuniger 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient unteranderem auch zum Betreiben eines hydrodynamischen Fahrantriebs des Feldhäckslers 1.

Der Feldhäcksler 1 umfasst eine Fahrerkabine 17, in der eine Eingabe-Ausgabeeinheit 18 angeordnet ist. Weiterhin umfasst der Feldhäcksler 1 eine Steuervorrichtung 14, welche eine Speichereinheit 15 zum Hinterlegen von Daten und eine Recheneinheit 16 zur Verarbeitung der in dem Speichereinheit 15 hinterlegten Daten umfasst. Die Steuervorrichtung 14 ist zur Ansteuerung zumindest der Häckselvorrichtung 6 eingerichtet. Die Eingabe-Ausgabeeinheit 18 umfasst eine Anzeige sowie Eingabemittel.

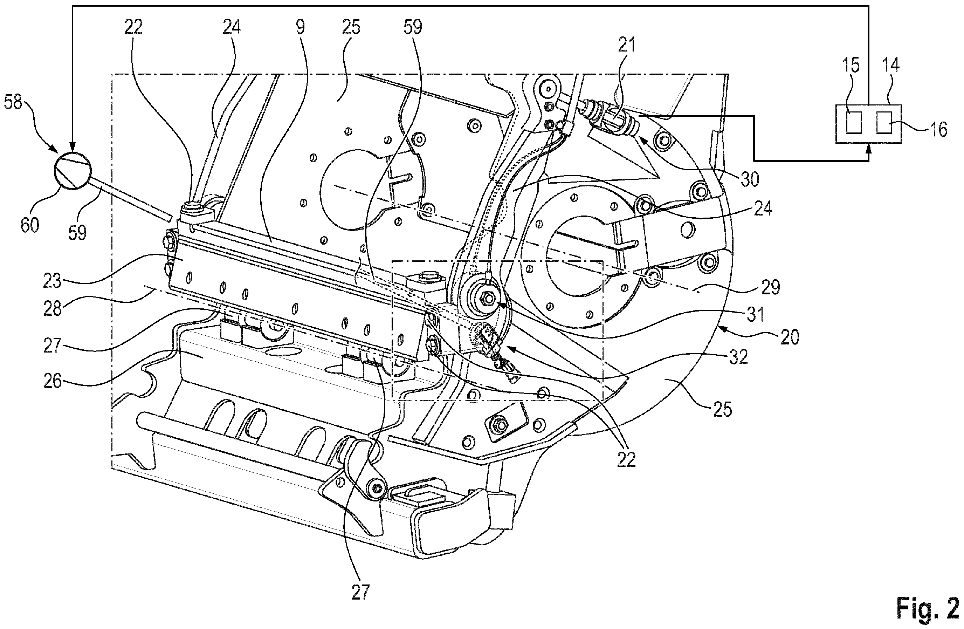

In Fig. 2 ist eine schematische und perspektivische Darstellung eines Trommelgehäuses 20 der Häckselvorrichtung 6 dargestellt. Das Trommelgehäuse 20 weist eine im Wesentlichen kreiszylindrische Form auf, und umschließt die - in Fig. 2 nicht dargestellte - Messertrommel 7 abschnittsweise in Umfangsrichtung. Die Gegenschneide 9 ist an einem Gegenschneidenträger 23 lösbar befestigt, hier und vorzugsweise durch Schraubverbindungen 22. Der Gegenschneidenträger 23 ist achsparallel zur Rotationsachse 29 der Messertrommel 7 verlaufend angeordnet. An den Gegenschneidenträger 23 schließen sich endseitig zwei einander gegenüberliegende Hebelarme 24 an, die sich im Wesentlichen in vertikaler Richtung zum Gegenschneidenträger 23 erstrecken. Die Hebelarme 24 verlaufen parallel zu Seitenwänden 25 des Trommelgehäuses 20. Die einander gegenüberliegenden Seitenwände 25 des Trommelgehäuses 20 begrenzen die Messertrommel 7 in axialer Richtung.

Der Gegenschneidenträger 23 ist beweglich an einer ortsfest an dem Trommelgehäuse 20 angeordneten Basis 26, wie einem Rahmenelement, gelagert, um ein Verstellen der Gegenschneide 9 radial auf die Messertrommel 7 zu und von dieser weg zu ermöglichen. Der Gegenschneidenträger 23 ist durch eine Anordnung von Schwenklagern 27 so an der Basis 26 gelagert, dass der Gegenschneidenträger 23 um eine Schwenkachse 28 schwenkbar ist, um das radiale Verstellen der Gegenschneide 9 zu ermöglichen. Die Schwenkachse 28 des Gegenschneidenträgers 23 erstreckt sich dabei parallel zur Rotationsachse 29 der Messertrommel 7.

Zur Verstellung der Gegenschneide 9 ist eine Stellvorrichtung 30 vorgesehen. Genauer weist die Stellvorrichtung 30 auf beiden Seiten des Trommelgehäuses 20 zumindest einen Aktor 21 auf. Der jeweilige Aktor 21 ist mit dem korrespondierend angeordneten Hebelarm 24 des Gegenschneidenträgers 23 verbunden. Die Komponenten der Stellvorrichtung 30 sind auf beiden Seiten des Trommelgehäuses 20 zueinander identisch ausgebildet. Die Hebelarme 24 des Gegenschneidenträgers 23 sind stellbeweglich an der Basis 26 und insbesondere am Trommelgehäuse 20 gelagert und mit dem Gegenschneidenträger 23 verbunden, so dass mit einer Stellbewegung der Hebelarme 24 die radiale Verstellung des Gegenschneidenträgers 23 antreibbar ist. Hierzu kann derjeweilige Hebelarm 24 an einem Längsende des Gegenschneidenträgers 23 mittels zweier Schrauben 22 verschraubt sein.

Die Gegenschneide 9 ist mittels der Stellvorrichtung 30 auf die Häckselmesser 8 zustellbar ist, wodurch ein Spaltmaß zwischen der Gegenschneide 9 und den Häckselmessern 8 auf der Messertrommel 7 eingestellt wird. Die Ansteuerung der Stellvorrichtung 30 kann durch die Steuervorrichtung 14 erfolgen. Denkbar ist auch, dass die Stellvorrichtung 30 eine separate Steuervorrichtung aufweist.

Um die Gegenschneide 9 während des Häckselprozesses gegen eine Schwingungsanregung zu schützen, weist die Stellvorrichtung 30 außerdem eine Klemmvorrichtung oder Bremsvorrichtung 31 auf, welche ein sicheres Halten und Verspannen der Gegenschneide 9 im Häckselprozess und dennoch ein feinfühliges Verstellen der Gegenschneide 9 bei einem Einstellvorgang erlaubt. Bevorzugt ist die Klemmvorrichtung oder Bremsvorrichtung 31 hydraulisch betätigbar.

Wie in Fig. 1 schematisch angedeutet, ist zumindest ein Abstandssensor 32 zur Detektion eines Abstands zwischen der Gegenschneide 9 und dem Trommelgehäuse 20 vorgesehen. Insbesondere ist der zumindest ein Abstandssensor 32 zwischen dem Hebelarm 24 und dem Trommelgehäuse 20 im Bereich des Gegenschneidenträgers 23 angeordnet. Vorzugsweise ist auch auf der gegenüberliegenden Seite des Trommelgehäuses 20 ein Abstandssensor 32 zwischen dieser und dem Hebelarm 24 angeordnet.

Des Weiteren kann der Häckselvorrichtung 6 eine Reinigungsvorrichtung 58 zugeordnet sein, die der Entfernung von Staub dient, der bei einem Nachschleifvorgang der Häckselmesser 8 sowie der Gegenschneide 9 entsteht. Die Reinigungsvorrichtung 58 kann insbesondere als Absaugvorrichtung oder als Abblasvorrichtung ausgeführt sein. Durch die Reinigungsvorrichtung 58 kann der Ablagerung von Schleifstaub entgegengewirkt werden, welcher die Messgenauigkeit des zumindest einen Abstandssensors 32 beeinflussen kann. Im dargestellten Ausführungsbeispiel ist die Reinigungsvorrichtung 58 als eine Absaugvorrichtung ausgeführt und umfasst zwei Absaugleitungen 59, wobei jeweils eine Absaugleitung 59 einem Abstandssensor 32 zugeordnet ist. Weiterhin umfasst die Reinigungsvorrichtung 58 wenigstens ein Gebläse 60, an welches die beiden Absaugleitungen 59 angeschlossen sind.

Die Reinigungsvorrichtung 58 wird von der Steuervorrichtung 14 angesteuert. Hierbei kann die Steuervorrichtung 14 dazu eingerichtet sein, die Reinigungsvorrichtung 58 in Abhängigkeit von zumindest einem Parameter automatisch anzusteuern, um den durch einen Schleifvorgang erzeugten Schleifstaub zu entfernen. Ein möglicher Parameter kann das Ergebnis einer durch die Steuervorrichtung 14 durchführbaren Plausibilitätsprüfung der von dem zumindest einen Abstandssensor 32 generierten Sensorwerte sein. Denkbar ist aber auch, dass die Reinigungsvorrichtung 58 an die Ausführung des Schleifvorgangs gekoppelt angesteuert wird, um den Schleifstaub vor, während und/oder nach einem Schleifvorgang zu entfernen.

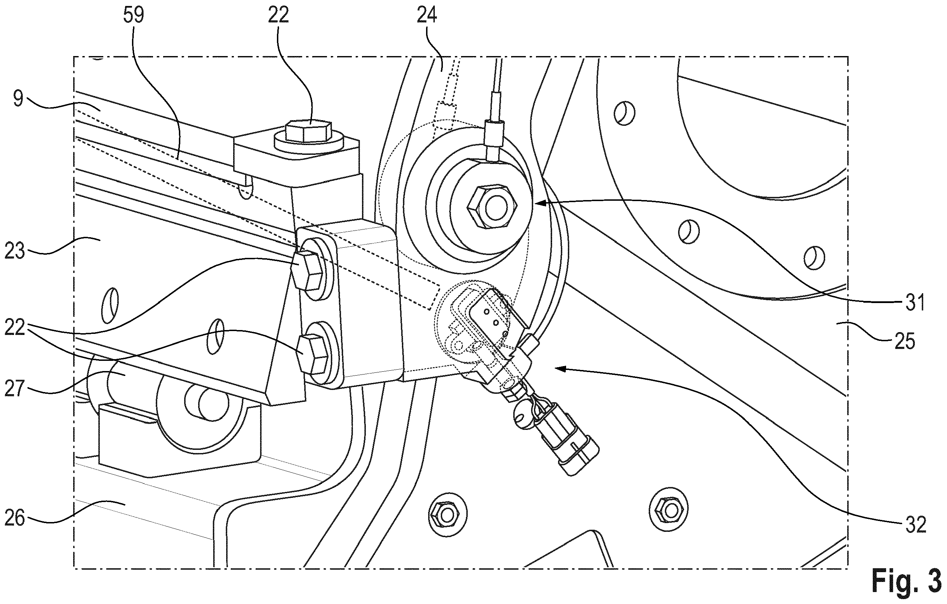

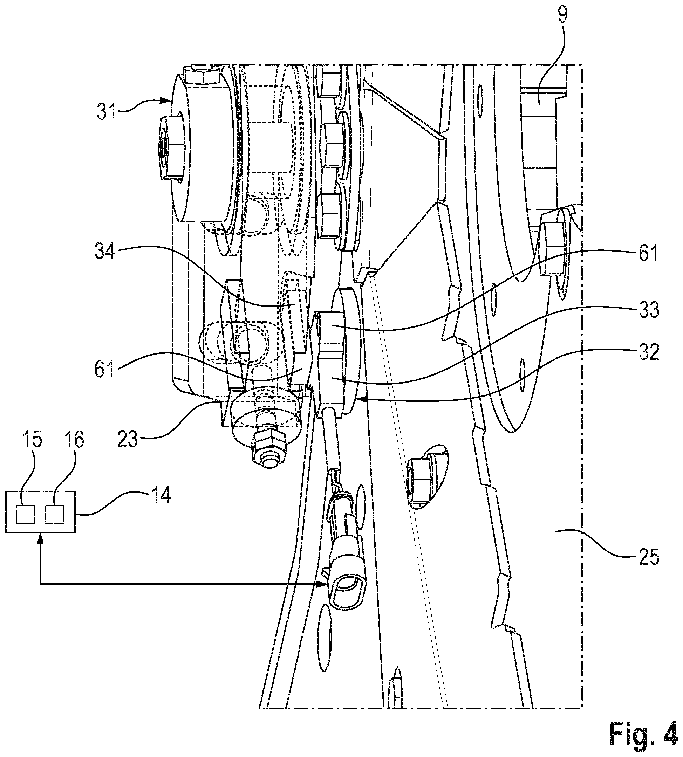

Die Darstellung in Fig. 3 zeigt eine Detailansicht des Trommelgehäuses 20 gemäß Fig. 2. In Fig. 4 ist die Detailansicht des Trommelgehäuses gemäß Fig. 3 von schräg hinten dargestellt. Der zumindest eine Abstandssensor 32 umfasst zumindest zwei Sensorkomponenten 33, 34, wobei eine Sensorkomponente 33 unmittelbar an dem Trommelgehäuse 20 angeordnet und die weitere Sensorkomponente 34 dem Gegenschneidenträger 23 zugeordnet ist. Die weitere Sensorkomponente 34 ist an dem zur an dem Trommelgehäuse 20 angeordneten Sensorkomponente 33 benachbarten Hebelarm 24 angeordnet. Die weitere Sensorkomponente 34 ist Innenseitig an dem Hebelarm 24 angeordnet. Unter der innenseitigen Anordnung der weiteren Sensorkomponente 34 ist die Anordnung auf der dem Trommelgehäuses 20 zugewandten Seite des Hebelarmes 24 zu verstehen. Die weitere Sensorkomponente 34 kann auch an dem Gegenschneidenträger 23 oder an dem Schwenklager 27 angeordnet sein.

Erfindungsgemäß arbeitet der zumindest eine Abstandssensor 32 berührungslos. Der zumindest eine Abstandssensor 32 kann alternativ auch berührend arbeiten. Vorteilhaft ist, dass mittels des zumindest einen berührungslos arbeitenden Abstandssensors 32 Sensordaten kontinuierlich auch während des Arbeitsprozesses des Feldhäckslers 1 generiert werden, wodurch eine fortlaufende Überwachung des Spaltmaßes erreichbar ist. Erfindungsgemäß ist der zumindest eine Abstandssensor 32 zur Bestimmung einer absoluten Position entlang eines Messweges eingerichtet. Der zumindest eine Abstandssensor 32 ist insbesondere als Absolutwertsensor ausgeführt.

Bei dem zumindest einen Abstandssensor 32 handelt es hier und vorzugsweise um einen Magnetbandsensor. Dabei umfasst der als Magnetbandsensor ausgeführte Abstandssensor 32 einen Lesekopf, der die am Trommelgehäuse 20 angeordnete Sensorkomponente 33 ausbildet, und ein Magnetband, welches die an dem Hebelarm 24 angeordnete Sensorkomponente 34 ausbildet. Hierbei können sich im Lesekopf magnetoresistive Sensoren bzw. Hall-Sensoren befinden. Beide Sensorkomponenten 33, 34 können beispielsweise jeweils eine Schutzeinrichtung 61 aufweisen, welche die jeweilige Sensorkomponente 33, 34 zumindest abschnittsweise umschließt. Die Schutzeinrichtung 61 kann als eine Ummantelung aus einem Kunststoff ausgeführt sein. Die Schutzeinrichtung 61 dient dazu, den jeweiligen Abstandssensor 32 vor Schleifstaub oder sonstigen Verunreinigungen bzw. auch vor Feuchtigkeit zu schützen.

Mittels des zumindest einen Sensors 32 wird eine Veränderung der Position des Gegenschneidenträgers 23 relativ zu dem Trommelgehäuse 20 erfasst. Genauer, es wird ein Verstellweg des Gegenschneidenträgers 23 gegenüber dem Trommelgehäuse 20 bestimmt, der durch die Ansteuerung der Aktoren 21 bewirkt wird.

Nachfolgend wird das erfindungsgemäße Verfahren zum Betreiben des Feldhäckslers 1, insbesondere zum Einstellen des Spaltmaßes zwischen der Gegenschneide 9 und den Häckselmessern 8 beschrieben. Das erfindungsgemäße Verfahren basiert darauf, dass durch die Stellvorrichtung 30, die zumindest einen Abstandssensor 32 umfasst, durch den ein Abstand zwischen der Gegenschneide 9 und dem Trommelgehäuse 20 detektiert wird, wie bereits ausgeführt.

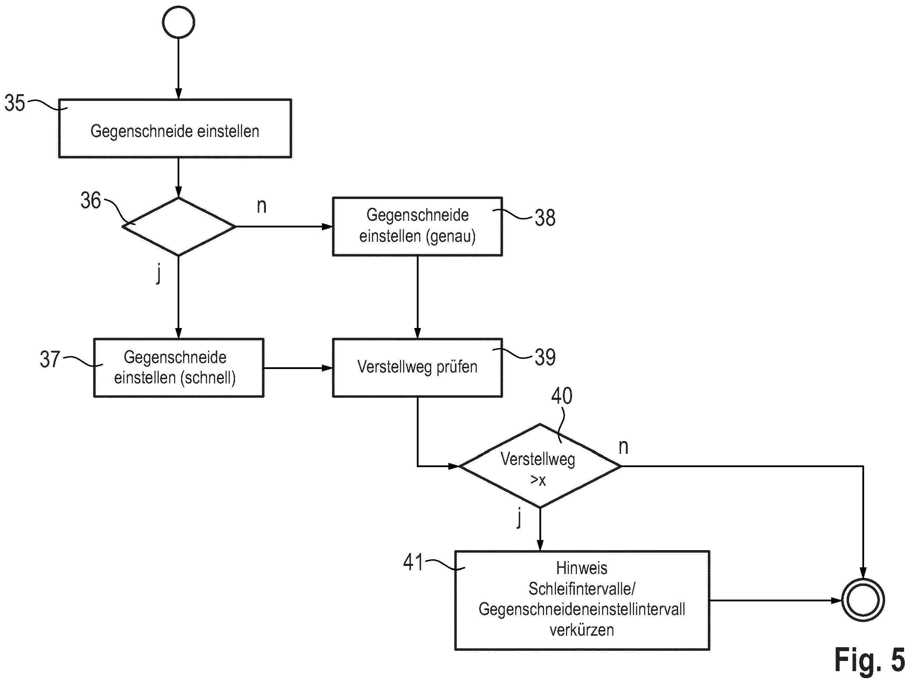

In Fig. 5 ist exemplarisch ein Ablaufdiagramm eines Einstellvorgangs für die Gegenschneide 9 dargestellt. Ein Bediener des Feldhäckslers 1 wählt mittels der Eingabe-Ausgabeeinheit 18 in einem ersten Schritt 35 den Vorgang "Gegenschneide einstellen" aus, um automatisch eine Einstellung der Gegenschneide 9 vornehmen zu lassen.

In einem nachfolgenden Schritt 36 wird das Vorliegen zumindest eines Kriteriums überprüft, welches darüber entscheidet, ob zum Schritt 37 oder zum Schritt 38 verzweigt wird. Dazu wird im Schritt 36 geprüft, ob in der Speichereinheit 15 der Steuervorrichtung 14 ein bereits eingestellter Wert für das Spaltmaß hinterlegt ist. Bejahendenfalls wird zum Schritt 37 übergegangen. Verneinendenfalls wird zum Schritt 38 übergegangen

Im Schritt 37 wird ein Einstellverfahren "Schnell" ausgeführt. Bei dem Einstellverfahren "Schnell" steht die Kompensation aufgetretenen Verschleißes an der Gegenschneide 9 durch einen Nachschleifvorgang im Vordergrund, an den sich ein vereinfachter Einstellvorgang anschließt. Dabei sieht der vereinfachte Einstellvorgang eine Annäherung der Gegenschneide 9 an die Messertrommel 7 bis zu einer ersten Berührung eines Häckselmessers 8 vor, um daraufhin den Abstand zwischen der Gegenschneide 9 und den Häckselmessern 8 auf ein vordefiniertes, beispielsweise durch den Bediener vorgegebenes, Spaltmaß durch die Ansteuerung der Aktoren 21 der Stellvorrichtung 30 einzustellen. Das Berühren von Gegenschneide 9 und Häckselmessern 8 wird in bekannter Weise durch - nicht dargestellte - Klopfsensoren detektiert, die vorzugsweise auf dem Gegenschneidenträger 23 angeordnet sind. Unter einem Klopfsensor wird vorliegend ganz allgemein ein Sensor verstanden, mit dem sich ein mechanischer Impuls zwischen Gegenschneide 9 und Häckselmesser 8 erfassen lässt, der auf die Drehung der Messertrommel 7 bei maximaler Zustellung der Gegenschneide 9 auf die Häckselmesser 8 zurückgeht. Insoweit ist der Begriff "Klopfsensor" vorliegend weit auszulegen. Hier und vorzugsweise handelt es sich bei dem Klopfsensor um einen Körperschallsensor.

Bevorzugt ist nur eine begrenzte Anzahl an Wiederholungen des auswählbaren Einstellverfahrens "Schnell" vorgesehen. Hierzu ist im Schritt 37 ein Zähler vorgesehen, der nach jedem Einstellvorgang, welcher gemäß dem Einstellverfahren "Schnell" durchgeführt wurde, inkrementiert wird. Wird ein Maximalwert der Anzahl an Wiederholungen gemäß dem Einstellverfahren "Schnell" erreicht, wird für den nächsten von dem Bediener initiierten Einstellvorgang automatisch zum Schritt 38 übergegangen.

Im Schritt 38 wird bei Vorliegen der im Schritt 36 geprüften Voraussetzung oder bei Überschreiten des Maximalwertes der Anzahl an Wiederholungen gemäß dem Einstellverfahren "Schnell", ein Einstellverfahren "Genau" ausgeführt. Gemäß dem Einstellverfahren "Genau" ist vorgesehen, dass sich der durchzuführende Einstellvorgang durch eine hohe Präzision auszeichnet und damit einer längeren Durchführungsdauer bedarf. Dabei wird im Einstellverfahren "Genau" ein kleinstmögliches paralleles Spaltmaß zwischen der Gegenschneide 9 und der Messertrommel 7 eingestellt, welches auf einer Vorgabe durch den Bediener oder die Steuervorrichtung 14 beruht. Der Einstellvorgang im Einstellverfahren "Genau" umfasst dabei ein beidseitiges Antasten der Gegenschneide 9 an die äußeren randseitigen Abschnitte der Messertrommel 7, bis jeweils eine Berührung mit einem der Häckselmesser 8 durch die Klopfsensoren detektiert wird. Hierdurch können Geometrieabweichungen an der Messertrommel 7 respektive der Häckselmesser 8 und/oder der Gegenschneide 9, die beispielsweise auf Verschleiß oder eine Beschädigung durch einen Fremdkörper zurückzuführen sind, berücksichtigt werden, indem beim anschließenden Parallelstellen der Gegenschneide 9 bezüglich der Messertrommel 7 zur Einstellung des kleinstmöglichen Spaltmaßes diese Geometrieabweichungen ausgemittelt werden. Die Geometrieabweichungen ergeben sich aus den Unterschieden der durch die beiden Abstandssensoren 32 bestimmten Verstellwege beim beidseitigen Antasten der Gegenschneide 9 an die Häckselmesser 8.

Im Anschluss an den Schritt 37 bzw. 38 wird ein Schritt 39 durchgeführt, der eine Überprüfung des während des jeweiligen Einstellvorganges zurückgelegten und sensorisch erfassten Verstellweges der Gegenschneide 9 durch die Steuervorrichtung 14 zum Gegenstand hat.

Im anschließenden Schritt 40 wird der im Schritt 39 bestimmte Verstellweg mit einem Grenzwert x verglichen. Bei einem Überschreiten des Grenzwertes x für den Verstellweg wird im Schritt 41 durch die Steuervorrichtung 14 ein Hinweis generiert, dass die Intervalle für die Durchführung des Nachschleifvorgangs und/oder der Einstellverfahren "Schnell" oder "Genau" zu verkürzen sind. Der im Schritt 41 generierte Hinweis wird dem Bediener durch die Eingabe-Ausgabeeinheit 18 zur Kenntnis gebracht. Verneinendenfalls endet der Einstellvorgang ohne einen Hinweis an den Bediener.

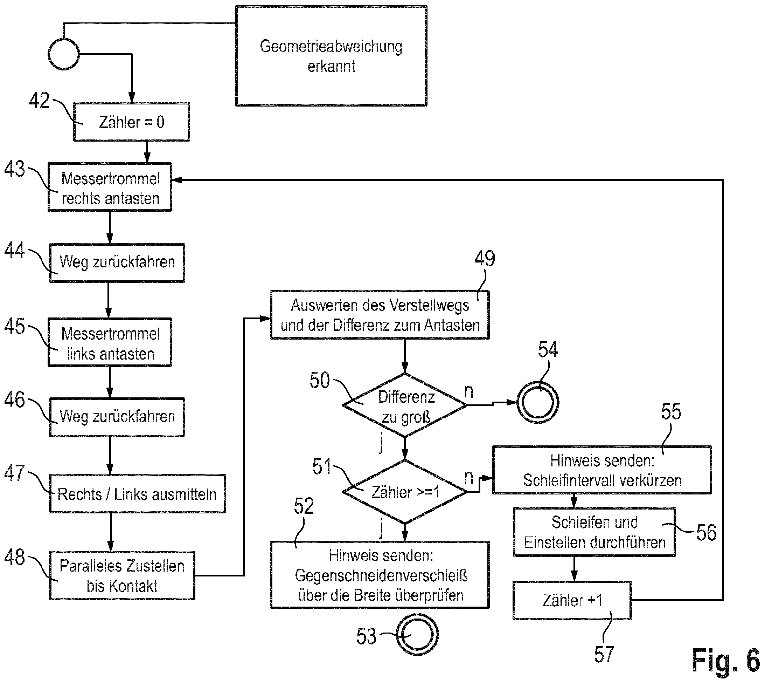

Die Darstellung gemäß Fig. 6 zeigt exemplarisch ein Ablaufdiagramm bei einer Detektion einer Geometrieabweichung von Gegenschneide 9 und/oder Messertrommel 7 während des Einstellvorgangs nach dem Einstellverfahren "Genau". Während der automatisierten Durchführung des Einstellverfahrens "Genau" kann vorgesehen sein, die Spaltform, das heißt die Kontur der Gegenschneide und der gegenüberliegenden Häckselmesser 8 zu überwachen, wie bereits weiter oben ausgeführt wurde. Eine Geometriebabweichung von Gegenschneide 9 und/oder Messertrommel 7 bzw. Häckselmessern 8 kann sich in einer balligen Form äußern. Diese ballige Form kann z. B. durch eine erhöhte Abnutzung im äußeren Bereich der Häckselvorrichtung 6 aufgrund ungleichmäßiger Gutzufuhr entstehen, bei der am Rand größere Mengen von Erntegut zugeführt werden als in der Mitte, oder aufgrund von Schleifvorgängen, bei denen der Schleifstein am Rand der Messertrommel 7 größere Einwirkzeiten und/oder -kräfte auf die Häckselmesser 8 und/oder die Gegenschneide 9 als in der Mitte der Häckselvorrichtung 6 hat.

In einem ersten Schritt 42 wird ein Zähler in der Speichereinheit 15 auf den Wert Null gesetzt. Anschließend wird im Schritt 43 die Gegenschneide 9 mit einer äußeren Randseite, beispielsweise der rechten Randseite, an die Messertrommel 7 herangefahren, bis die Klopfsensoren eine erstmalige Berührung detektieren. Im Schritt 44 wird die Gegenschneide 9 zurückgefahren. Im anschließenden Schritt 45 wird die andere äußere Randseite, beispielsweise die linke Randseite, an die Messertrommel 7 herangefahren, bis die Klopfsensoren wiederum eine erstmalige Berührung detektieren. Im darauffolgenden Schritt 46 wird die Gegenschneide 9 zurückgefahren. Die jeweiligen Verstellwege, die in den Schritten 43 und 45 zurückgelegt wurden, sind von den dem jeweiligen Abstandssensor 32 erfasst und zur Auswertung an die Steuervorrichtung 14 übertragen worden. Die Verstellwege der linken und rechten Randseite der Gegenschneide werden im Schritt 47 durch die Recheneinheit 16 ausgemittelt. Im Schritt 48 wird die Gegenschneide 9 parallel zur Messertrommel 7 zugestellt, bis es zu einem durch die Klopfsensoren detektierbaren Kontakt kommt.

Im Schritt 49 wird der beim parallelen Zustellen zurückgelegte Verstellweg wiederum durch die Abstandssensoren 32 erfasst und nach der Auswertung in der Speichereinheit 15 hinterlegt. Der beim parallelen Zustellen zurückgelegte Verstellweg wird mit den jeweiligen Verstellwegen, die beim Antasten in den vorangehenden Schritten 43 und 45 bestimmt wurden, verglichen, um einen Differenzwert zu bestimmen. Im Schritt 50 wird der Differenzwert mit einem in der Speichereinheit 15 der Steuervorrichtung 14 hinterlegten Schwellwert für eine maximal zulässige Differenz verglichen. Der Schwellwert für eine maximal zulässige Differenz kann durch den Bediener vorgebbar sein oder eine vom Hersteller der Häckselvorrichtung 6, der Häckselmesser 8 und oder der Gegenschneide 9 Vorgabe sein, die in der Speichereinheit 15 hinterlegt ist.

Wird im Schritt 50 festgestellt, dass der Differenzwert unterhalb des Schwellwertes für die maximal zulässige Differenz liegt, wird keine Maßnahme abgeleitet und die Prozedur endet im Schritt 54.

Wird im Schritt 50 festgestellt, dass der Differenzwert den Schwellwert für die maximal zulässige Differenz überschreitet, wird im Schritt 51 der Zählerstand des im Schritt 42 gesetzten Zählers dahingehend überprüft, ob dieser größer oder gleich 1 ist.

Bejahendenfalls wird zum Schritt 52 übergegangen. Im Schritt 52 wird durch die Steuervorrichtung 14 ein Hinweis für den Bediener generiert, wonach die Gegenschneide 9 hinsichtlich des Verschleißzustands über die gesamte Breite zu prüfen ist. Anschließend endet die Prozedur im Schritt 53.

Verneinendenfalls wird vom Schritt 51 zum Schritt 55 übergegangen. Im Schritt 55 wird durch die Steuervorrichtung 14 ein Hinweis generiert, dass die Intervalle für die Durchführung des Nachschleifvorgangs zu verkürzen sind. Im Anschluss an den Schritt 55 wird im Schritt 56 das Nachschleifen der Gegenschneide 9 und/oder der Häckselmesser 8 sowie das wiederholen des Einstellvorgangs automatisch durchgeführt.

Anschließend wird im nachfolgenden Schritt 57 der Zähler inkrementiert. Daraufhin wird zum Schritt 43 zurückgesprungen, um den Erfolg der in Schritt 56 durchgeführten Maßnahme zu überprüfen.

Weiterhin kann die Steuervorrichtung 14 dazu eingerichtet sein, die Bestimmung der Position des Gegenschneidenträgers 23 fortlaufend im laufenden Erntebetrieb durchzuführen. Somit lässt sich beispielsweise die Funktion der Bremsvorrichtung 31 an den Hebelarmen 24 der Stellvorrichtung 30 überwachen. Ungewollte Bewegungen der Gegenschneide 9 können erfasst werden, die auf ein Lösen einer oder beider Bremsvorrichtungen 31 an den Hebelarmen 24 zurückzuführen sein können. Ebenso kann der Sitz der Gegenschneide 9 auf dem Gegenschneidenträger 23 überwacht werden. Ein weiterer Aspekt kann darin besteht, dass eine Lageänderung der Gegenschneide 9 relativ zum Gegenschneidenträger 23 aufgrund von Fremdkörpern, die in die Häckselvorrichtung 6 eingedrungen sind, erfasst werden kann.

Die Ausgabe von Hinweisen erfolgt hier und vorzugsweise mittels der Eingabe-Ausgabeeinheit 18.

Weiter bevorzugt kann die Steuervorrichtung 14 dazu eingerichtet sein, nach einem Neustart zumindest der Häckselvorrichtung 6, insbesondere des Hauptantriebstranges des Feldhäckslers 1, mittels des zumindest einen Abstandssensors 32 eine Abweichung vom letztmalig vor dem Neustart eingestellten Wert für das Spaltmaß zu bestimmen und auszugeben. Auf diese Weise können unerwünschte Verschiebungen festgestellt werden. Zudem kann die Steuervorrichtung 14 dazu eingerichtet sein, einen Hinweis auf eine festgestellte Verschiebung ausgeben. Insbesondere kann dieser Hinweis mit einer Handlungsanweisung verbunden sein, die Gegenschneide 9 nach einem der in der Steuervorrichtung 14 hinterlegten Einstellverfahren neu einzustellen.

Des Weiteren kann die Steuervorrichtung 14 dazu eingerichtet sein, nach einem Wechsel eines Vorsatzgerätes 2 eine Veränderung des Abstands zwischen der Häckseltrommel 7 und der Gegenschneide 9 gegenüber einem vor dem Wechsel bestimmten Abstand zu detektieren und bei Detektion einer Abstandsänderung eine Maßnahme abzuleiten. Hierbei kann es sich bei einer abzuleitenden Maßnahme um einen auszugebenden Warnhinweis oder eine auszugebende Handlungsanweisung handeln. So kann die Maßnahme eine Ausgabe eines Warnhinweises und/oder das Durchführen eines Einstellvorganges der Gegenschneide 9 sein.

Bevorzugt kann die Steuervorrichtung 14 dazu eingerichtet sein, in Abhängigkeit von einem zurückgelegten Verstellweg des Gegenschneidenträgers 23 Verschleißdaten der Häckselmesser 8 und/oder der Gegenschneide 9 zu bestimmen und mittels der Eingabe-Ausgabeeinheit 18 auszugeben. Dabei wird der während des jeweiligen Einstellvorgangs zurückgelegte Verstellweg erfasst und aufsummiert. Ein Überschreiten eines vorgebbaren Grenzwertes für einen Gesamtstellweg führt dazu, dass die Steuervorrichtung 14 mittels der Eingabe-Ausgabeeinheit 18 einen Hinweis ausgibt, dass das Ende der Nutzungsdauer erreicht ist. Dies soll dazu dienen, den Bediener auf das Ende der Nutzungsdauer zumindest der Gegenschneide 9 hinzuweisen. Insbesondere kann anhand des während eines Einstellvorganges zurückgelegten Verstellweges des Gegenschneide 9 der Trommelradius, d.h. Hüllradius der Häckselmesser 8, automatisch durch die Steuervorrichtung 14 berechnet werden, wodurch der Messerzustand automatisch ermittelt wird.

Bevorzug kann die Steuervorrichtung 14 dazu eingerichtet sein, die Gegenschneide 9 automatisch in eine Parkstellung und/oder eine Kalibrierstellung zu überführen. Mittels der Eingabe-Ausgabeeinheit 18 kann der Bediener einen Steuerbefehl auslösen und an die Steuervorrichtung 14 übertragen, um die Gegenschneide 9 durch eine Ansteuerung des zumindest einen Aktors 21 in die Parkstellung und/oder die Kalibrierstellung zu überführen. In der Parkstellung und/oder der Kalibrierstellung nimmt die Gegenschneide 9 eine definierte Position absolut zum Trommelgehäuse 20 ein. In der Parkposition kann die Gegenschneide 9 durch das Aufschwenken des Einzugsgehäuses zugänglich gemacht werden. Somit lässt sich beispielsweise die Gegenschneide 9 nach einer Demontage wegen eines fruchtartbedingten oder verschleißbedingten Wechsels oder einem Drehen auf dem Gegenschneidenträger 23 bezüglich eines Referenzpunktes am Trommelgehäuse 20 ausrichten. Die Ausrichtung der Gegenschneide 9 bezüglich des Referenzpunktes am Trommelgehäuse 20 kann manuell mittels einer Lehre erfolgen.

### Bezugszeichenliste

| | | | |
|---|---|---|---|
| 1 | Feldhäcksler | 34 | Sensorkomponente |
| 2 | Vorsatzgerät | 35 | Schritt |
| 3 | Einzugsvorrichtung | 36 | Schritt |
| 4 | Obere Einzugswalze | 37 | Schritt |
| 5 | Untere Einzugswalze | 38 | Schritt |
| 6 | Häckselvorrichtung | 39 | Schritt |
| 7 | Messertrommel | 40 | Schritt |
| 8 | Häckselmesser | 41 | Schritt |
| 9 | Gegenschneide | 42 | Schritt |
| 10 | Auswurfschacht | 43 | Schritt |
| 11 | Nachbearbeitungsvorrichtung | 44 | Schritt |
| 12 | Nachbeschleuniger | 45 | Schritt |
| 13 | Auswurfkrümmer | 46 | Schritt |
| 14 | Steuervorrichtung | 47 | Schritt |
| 15 | Speicher | 58 | Schritt |
| 16 | Recheneinheit | 49 | Schritt |
| 17 | Fahrerkabine | 50 | Schritt |
| 18 | Eingabe-Ausgabe-Einheit | 51 | Schritt |
| 19 | Antriebsmotor | 52 | Schritt |
| 20 | Trommelgehäuse | 53 | Schritt |
| 21 | Aktor | 54 | Schritt |
| 22 | Schraubverbindung | 55 | Schritt |
| 23 | Gegenschneidenträger | 56 | Schritt |
| 24 | Hebelarm | 57 | Schritt |
| 25 | Seitenwand | 58 | Reinigungsvorrichtung |
| 26 | Basis | 59 | Absaugleitung |
| 27 | Schwenklager | 60 | Gebläse |
| 28 | Schwenkachse | 61 | Schutzeinrichtung |
| 29 | Rotationsachse | | |
| 30 | Stellvorrichtung | | |
| 31 | Bremsvorrichtung | | |
| 32 | Abstandssensor | | |
| 33 | Sensorkomponente | | |

## Patentansprüche

1. Feldhäcksler (1), umfassend eine Häckselvorrichtung (6) mit einer Messertrommel (7) mit daran angeordneten Häckselmessern (8), wobei die Messertrommel (7) abschnittsweise von einem Trommelgehäuse (20) umgeben ist, sowie mit einer mit den Häckselmessern (8) zusammenwirkenden Gegenschneide (9), die an einem Gegenschneidenträger (23) lösbar befestigt ist, wobei eine Steuervorrichtung (14) und eine mindestens einen Aktor (21) aufweisende Stellvorrichtung (30) vorgesehen sind, mittels der die Gegenschneide (9) auf die Häckselmesser (8) zustellbar ist, wodurch ein Spaltmaß zwischen der Gegenschneide (9) und den Häckselmessern (8) eingestellt wird, und wobei die Stellvorrichtung (30) zumindest einen Abstandssensor (32) zur Detektion eines Abstands zwischen der Gegenschneide (9) und dem Trommelgehäuse (20) umfasst, der berührend oder berührungslos arbeitet und durch ein drahtloses oder drahtgebundenes Kommunikationsmittel mit der Steuervorrichtung (14) in Verbindung steht, welche zur Auswertung der Sensordaten eingerichtet ist, **dadurch gekennzeichnet, dass** der zumindest eine Abstandssensor (32) zur Bestimmung der Position des Gegenschneidenträgers (23) relativ zum Trommelgehäuse (20) eingerichtet ist und zumindest zwei Sensorkomponenten (33, 34) umfasst, wobei eine Sensorkomponente (33, 34) an dem Trommelgehäuse (20) angeordnet ist und die weitere Sensorkomponente (33,34) dem Gegenschneidenträger (23) zugeordnet ist.

2. Feldhäcksler (1) nach Anspruch 1, **dadurch gekennzeichnet, dass** der Gegenschneidenträger (23) an achsparallel zur Rotationsachse (29) der Messertrommel (7) angeordneten Schwenklagern (27) schwenkbar gelagert ist, wobei sich an den Gegenschneidenträger (23) endseitig zwei einander gegenüberliegende Hebelarme (24) anschließen, die sich im Wesentlichen in vertikaler Richtung zum Gegenschneidenträger (23) erstrecken.

3. Feldhäcksler (1) nach Anspruch 2, **dadurch gekennzeichnet, dass** die weitere Sensorkomponente (33, 34) an dem zur am Trommelgehäuse (20) angeordneten Sensorkomponente (33, 34) benachbarten Hebelarm (24) oder an dem benachbarten Schwenklager (27) angeordnet ist.

4. Feldhäcksler (1) nach einem der vorangehenden Ansprüche, **dadurch gekennzeichnet, dass** der zumindest eine Abstandssensor (32) zumindest eine Schutzeinrichtung (61) aufweist, welche zumindest eine der Sensorkomponenten (33, 34) zumindest abschnittsweise umschließt.

5. Feldhäcksler (1) nach Anspruch 4, **dadurch gekennzeichnet, dass** die Schutzeinrichtung (61) als Ummantelung oder Einhausung aus einem Kunststoff ausgeführt ist.

6. Feldhäcksler (1) nach Anspruch 4 oder 5, **dadurch gekennzeichnet, dass** die Schutzeinrichtung (61) als ein Rahmenelement oder eine Bürste ausgeführt ist.

7. Feldhäcksler (1) nach einem der vorangehenden Ansprüche, **dadurch gekennzeichnet, dass** dem zumindest einen Abstandssensor (32) eine Reinigungsvorrichtung (58) zugeordnet ist, die dazu eingerichtet ist, die Sensorkomponenten (33, 34) im Wesentlichen von bei einem Schleifvorgang erzeugten Staub freizuhalten.

8. Feldhäcksler (1) nach Anspruch 7, **dadurch gekennzeichnet, dass** die Steuervorrichtung (14) dazu eingerichtet ist, die Reinigungsvorrichtung (58) in Abhängigkeit von zumindest einem Parameter automatisch anzusteuern, um durch einen Schleifvorgang erzeugten Staub zu entfernen.

9. Feldhäcksler (1) nach einem der vorangehenden Ansprüche, **dadurch gekennzeichnet, dass** die Steuervorrichtung (14) eine Eingabe-Ausgabeeinheit (18) umfasst, die zur Eingabe eines Wertes für das einzuhaltende Spaltmaß eingerichtet ist, welches durch den zumindest einen Abstandssensor (32) überprüfbar ist.

10. Feldhäcksler (1) nach einem der vorangehenden Ansprüche, **dadurch gekennzeichnet, dass** die Steuervorrichtung (14) eine Recheneinheit (16) und eine Speichereinheit (15) umfasst, in der zumindest zwei auswählbare Einstellverfahren zur automatischen Ausführung eines Einstellvorgangs zur Einstellung der Gegenschneide (9) hinterlegt sind, die durch die Recheneinheit (16) ausgeführt werden.

11. Feldhäcksler (1) nach Anspruch 10, **dadurch gekennzeichnet, dass** als auswählbare Einstellverfahren ein Verfahren "Schnell", ein Verfahren "Genau", ein Verfahren "Verschleißoptimierung" und/oder ein Verfahren "Manuell" in der Speichereinheit (15) hinterlegt sind.

12. Feldhäcksler (1) nach Anspruch 11, **dadurch gekennzeichnet, dass** die Steuervorrichtung (14) dazu eingerichtet ist, im Einstellverfahren "Genau" die Stellvorrichtung (30) anzusteuern, dass sich ein kleinstmögliches paralleles Spaltmaß zwischen der Gegenschneide (9) und der Messertrommel (7) eingestellt, welches auf einer Vorgabe, insbesondere durch einen Bediener oder die Steuervorrichtung (14) beruht.

13. Feldhäcksler (1) nach Anspruch 11 oder 12, **dadurch gekennzeichnet, dass** die Steuervorrichtung (14) dazu eingerichtet ist, im Einstellverfahren "Schnell" die Stellvorrichtung (30) anzusteuern, dass sich an einen Nachschleifvorgang der Häckselmesser (8) und/oder der Gegenschneide (9) ein vereinfachter Einstellvorgang anschließt, wobei während des vereinfachten Einstellvorgangs eine Annäherung der Gegenschneide (9) an die Messertrommel (7) bis zu einer ersten Berührung eines Häckselmessers (8) erfolgt, um daraufhin den Abstand zwischen der Gegenschneide (9) und den Häckselmessern (8) auf ein vordefiniertes, insbesondere durch den Bediener vorgegebenes, Spaltmaß durch die Ansteuerung der Stellvorrichtung (30) einzustellen.

14. Feldhäcksler (1) nach einem der Ansprüche 11 bis 13, **dadurch gekennzeichnet, dass** die Steuervorrichtung (14) dazu eingerichtet ist, im Einstellverfahren "Manuell" die Stellvorrichtung (30) anzusteuern, dass eine manuelle Einstellung der Gegenschneide (9) mittels einer Lehre oder eines Werkzeugs durchführbar ist.

15. Feldhäcksler (1) nach einem der vorangehenden Ansprüche, **dadurch gekennzeichnet, dass** die Steuervorrichtung (14) dazu eingerichtet ist, eine Voreinstellung der Gegenschneide (9) in Abhängigkeit von der Erntegutart und/oder bei einem Vorsatzgerätewechsel durchzuführen.

16. Feldhäcksler (1) nach einem der vorangehenden Ansprüche, **dadurch gekennzeichnet, dass** die Steuervorrichtung (14) dazu eingerichtet ist, die Bestimmung der Position des Gegenschneidenträgers (23) fortlaufend im laufenden Erntebetrieb durchzuführen.

17. Feldhäcksler (1) nach Anspruch 16, **dadurch gekennzeichnet, dass** die Steuervorrichtung (14) dazu eingerichtet ist, in Abhängigkeit von der im laufenden Erntebetrieb bestimmten Position des Gegenschneidenträgers (23) eine auszuführende Maßnahme abzuleiten.

18. Feldhäcksler (1) nach Anspruch 17, **dadurch gekennzeichnet, dass** die auszuführende Maßnahme eine Ausgabe eines Warnhinweises oder das Stoppen der Messertrommel (7) ist.

19. Feldhäcksler (1) nach einem der vorangehenden Ansprüche, **dadurch gekennzeichnet, dass** die Steuervorrichtung (14) dazu eingerichtet ist, nach einem Neustart zumindest der Häckselvorrichtung (6), insbesondere des Feldhäckslers (1), mittels des zumindest einen Abstandssensors (32) eine Abweichung vom letztmalig vor dem Neustart eingestellten Wert für das Spaltmaß zu bestimmen und auszugeben.

20. Feldhäcksler (1) nach einem der vorangehenden Ansprüche, **dadurch gekennzeichnet, dass** die Steuervorrichtung (14) dazu eingerichtet ist, nach einem Wechsel eines Vorsatzgerätes zur Aufnahme von Erntegut eine Veränderung des Abstands zwischen Häckseltrommel (7) und Gegenschneide (9) gegenüber einem vor der dem Wechsel bestimmten Abstand zu detektieren und bei Detektion einer Abstandsänderung eine Maßnahme abzuleiten.

21. Feldhäcksler (1) nach Anspruch 20, **dadurch gekennzeichnet, dass** die Maßnahme eine Ausgabe eines Warnhinweises und/oder das Durchführen eines Einstellvorganges der Gegenschneide (9) ist.

22. Feldhäcksler (1) nach einem der vorangehenden Ansprüche, **dadurch gekennzeichnet, dass** die Steuervorrichtung (14) dazu eingerichtet ist, in Abhängigkeit von einem zurückgelegten Verstellweg des Gegenschneidenträgers (23) Verschleißdaten der Häckselmesser (8) und/oder der Gegenschneide (9) zu bestimmen und auszugeben.

23. Feldhäcksler (1) nach einem der Ansprüche 10 bis 22, **dadurch gekennzeichnet, dass** die Steuervorrichtung (14) dazu eingerichtet ist, im Rahmen der automatischen Ausführung eines Einstellvorgangs eine Geometrieabweichung, insbesondere Balligkeit, der Form der Gegenschneide (9) oder der Häckselmesserform zu bestimmen, die einen hierfür vorgesehenen Schwellwert überschreitet.

24. Feldhäcksler (1) nach einem der vorangehenden Ansprüche, **dadurch gekennzeichnet, dass** die Steuervorrichtung (14) dazu eingerichtet ist, einen Austausch von Häckselmessern (8) und/oder Gegenschneide (9) und/oder eine manuelle Veränderung der Einstellung des Spaltmaßes und/oder der Anordnung von Häckselmessern (8) und/oder Gegenschneide (9) zu bestimmen.

25. Feldhäcksler (1) nach einem der vorangehenden Ansprüche, **dadurch gekennzeichnet, dass** die Steuervorrichtung (14) dazu eingerichtet ist, die Gegenschneide (9) automatisch in eine Parkstellung und/oder eine Kalibrierstellung zu überführen.

26. Verfahren zum Betreiben eines Feldhäckslers (1), umfassend eine Häckselvorrichtung (6) mit einer Messertrommel (7) mit daran angeordneten Häckselmessern (8), wobei die Messertrommel (7) abschnittsweise von einem Trommelgehäuse (20) umgeben ist, sowie mit einer mit den Häckselmessern (8) zusammenwirkenden Gegenschneide (9), die an einem Gegenschneidenträger (23) lösbar befestigt ist, wobei eine eine Steuervorrichtung (14) und mindestens einen Aktor (21) aufweisende Stellvorrichtung (30) vorgesehen ist, mittels der die Gegenschneide (9) auf die Häckselmesser (8) zugestellt wird, wodurch ein Spaltmaß zwischen der Gegenschneide (9) und den Häckselmessern (8) eingestellt wird, und wobei die Stellvorrichtung (30) zumindest einen Abstandssensor (32) umfasst, durch den ein Abstand zwischen der Gegenschneide (9) und dem Trommelgehäuse (20) detektiert wird, der berührend oder berührungslos arbeitet und durch ein drahtloses oder drahtgebundenes Kommunikationsmittel mit der Steuervorrichtung (14) in Verbindung steht, welche zur Auswertung der Sensordaten eingerichtet ist, **dadurch gekennzeichnet, dass** der zumindest eine Abstandssensor (32) zur Bestimmung der Position des Gegenschneidenträgers (23) relativ zum Trommelgehäuse (20) eingerichtet ist und zumindest zwei Sensorkomponenten (33, 34) umfasst, wobei eine Sensorkomponente (33, 34) an dem Trommelgehäuse (20) angeordnet ist und die weitere Sensorkomponente (33,34) dem Gegenschneidenträger (23) zugeordnet ist.

## Claims

1. A forage harvester (1), comprising a chopping device (6) with a knife drum (7) with chopping knives (8) disposed thereon, wherein the knife drum (7) is sectionally surrounded by a drum housing (20), as well as with a counter cutter (9) which cooperates with the chopping knives (8) and which is detachably fastened to a counter cutter carrier (23), wherein a control device (14) and a positioning device (30) having at least one actuator (21) are provided, by means of which the counter cutter (9) can be advanced towards the chopping knives (8), whereupon a clearance between the counter cutter (9) and the chopping knives (8) is set, and wherein the positioning device (30) comprises at least one distance sensor (32) for detecting a distance between the counter cutter (9) and the drum housing (20) which operates in a contacting or contactless manner and is connected by a wireless or wired communication means to the control device (14) which is configured to analyse the sensor data, **characterized in that** the at least one distance sensor (32) is configured to determine the position of the counter cutter carrier (23) relative to the drum housing (20) and comprises at least two sensor components (33, 34), wherein one sensor component (33, 34) is disposed on the drum housing (20) and the other sensor component (33, 34) is associated with the counter cutter carrier (23).

2. The forage harvester (1) according to claim 1, **characterized in that** the counter cutter carrier (23) is pivotally mounted on pivot bearings (27) disposed with axes parallel to the axis of rotation (29) of the knife drum (7), wherein two mutually opposing crank arms (24) are attached to the ends of the counter cutter carrier (23) and extend substantially in the vertical direction to the counter cutter carrier (23).

3. The forage harvester (1) according to claim 2, **characterized in that** the other sensor component (33, 34) is disposed on the crank arm (24) adjacent to the sensor component (33, 34) disposed on the drum housing (20) or on the adjacent pivot bearing (27).

4. The forage harvester (1) according to one of the preceding claims, **characterized in that** the at least one distance sensor (32) has at least one protection means (61) which at least sectionally surrounds at least one of the sensor components (33, 34).

5. The forage harvester (1) according to claim 4, **characterized in that** the protection means (61) is configured as a covering or enclosure produced from a plastic.

6. The forage harvester (1) according to claim 4 or claim 5, **characterized in that** the protection means (61) is configured as a frame element or a brush.

7. The forage harvester (1) according to one of the preceding claims, **characterized in that** a cleaning device (58) which is configured to keep the sensor components (33, 34) substantially free from dust produced during a sharpening procedure is associated with the at least one distance sensor (32).

8. The forage harvester (1) according to claim 7, **characterized in that** the control device (14) is configured to control the cleaning device (58) automatically as a function of at least one parameter in order to remove dust produced by a sharpening procedure.

9. The forage harvester (1) according to one of the preceding claims, **characterized in that** the control device (14) comprises an input/output unit (18) which is configured for inputting a value for the clearance to be complied with, which can be checked by the at least one distance sensor (32).

10. The forage harvester (1) according to one of the preceding claims, **characterized in that** the control device (14) comprises a processing unit (16) and a memory unit (15) in which at least two selectable adjustment methods which will be executed by the processing unit (16) are stored for automatically executing an adjustment procedure for setting the counter cutter (9).

11. The forage harvester (1) according to claim 10, **characterized in that** a "Quick" method, a "Precise" method, a "Wear Optimisation" method and/or a "Manual" method are stored in the memory unit (15) as the selectable adjustment method.

12. The forage harvester (1) according to claim 11, **characterized in that** the control device (14) is configured to control the positioning device (30) in the "Precise" adjustment method in a manner such that a smallest possible parallel clearance between the counter cutter (9) and the knife drum (7) is set which is based on a specification, in particular by an operator or the control device (14).

13. The forage harvester (1) according to claim 11 or claim 12, **characterized in that** the control device (14) is configured, in the "Quick" adjustment method, to control the positioning device (30) in a manner such that a simplified adjustment procedure follows a procedure for re-sharpening the chopping knives (8) and/or the counter cutter (9), wherein, during the simplified adjustment procedure, an approach of the counter cutter (9) to the knife drum (7) up to an initial contact of a chopping knife (8) occurs, in order to thereupon set the distance between the counter cutter (9) and the chopping knives (8) to a pre-defined clearance, in particular specified by the operator, by controlling the positioning device (30).

14. The forage harvester (1) according to one of claims 11 to 13, **characterized in that** the control device (14) is configured, in the "Manual" adjustment method, to control the positioning device (30) in a manner such that a manual adjustment of the counter cutter (9) can be carried out by means of a gauge or a tool.

15. The forage harvester (1) according to one of the preceding claims, **characterized in that** the control device (14) is configured to carry out a pre-adjustment of the counter cutter (9) as a function of the type of harvested material and/or when a change of front attachment is carried out.

16. The forage harvester (1) according to one of the preceding claims, **characterized in that** the control device (14) is configured to carry out the determination of the position of the counter cutter carrier (23) continuously during the ongoing harvesting operation.

17. The forage harvester (1) according to claim 16, **characterized in that** the control device (14) is configured to derive an action to be executed as a function of the position of the counter cutter carrier (23) determined during the ongoing harvesting operation.

18. The forage harvester (1) according to claim 17, **characterized in that** the action to be executed is an output of a warning, or stopping the knife drum (7).

19. The forage harvester (1) according to one of the preceding claims, **characterized in that** the control device (14) is configured, after a restart of at least the chopping device (6), in particular of the forage harvester (1), to determine and output a deviation from the last set value for the clearance prior to the restart by means of the at least one distance sensor (32).

20. The forage harvester (1) according to one of the preceding claims, **characterized in that** the control device (14) is configured, after a change of a front attachment for picking up harvested material, to detect a variation in the distance between the chopping drum (7) and the counter cutter (9) compared with a distance determined prior to the change and to derive an action upon detection of a variation in the distance.

21. The forage harvester (1) according to claim 20, **characterized in that** the action is an output of a warning and/or carrying out a procedure for adjusting the counter cutter (9).

22. The forage harvester (1) according to one of the preceding claims, **characterized in that** the control device (14) is configured to determine and output wear data for the chopping knives (8) and/or the counter cutter (9) as a function of an adjustment path of the counter cutter carrier (23) which is travelled.

23. The forage harvester (1) according to one of claims 10 to 22, **characterized in that** in the context of the automatic execution of an adjustment procedure, the control device (14) is configured to determine a geometric deviation, in particular camber, in the shape of the counter cutter (9) or the shape of the chopping knife which exceeds a threshold value provided for this purpose.

24. The forage harvester (1) according to one of the preceding claims, **characterized in that** the control device (14) is configured to determine a change of chopping knives (8) and/or counter cutter (9) and/or a manual change in the adjustment of the clearance and/or the disposition of the chopping knives (8) and/or counter cutter (9).

25. The forage harvester (1) according to one of the preceding claims, **characterized in that** the control device (14) is configured so as to move the counter cutter (9) automatically into a park position and/or a calibration position.

26. A method for operating a forage harvester (1), comprising a chopping device (6) with a knife drum (7) with chopping knives (8) disposed thereon, wherein the knife drum (7) is sectionally surrounded by a drum housing (20), as well as with a counter cutter (9) which cooperates with the chopping knives (8) and which is detachably fastened to a counter cutter carrier (23), wherein a positioning device (30) having a control device (14) and at least one actuator (21) is provided, by means of which the counter cutter (9) is advanced towards the chopping knives (8), whereupon a clearance between the counter cutter (9) and the chopping knives (8) is set, and wherein the positioning device (30) comprises at least one distance sensor (32), by means of which a distance between the counter cutter (9) and the drum housing (20) is detected, which operates in a contacting or contactless manner and is connected by a wireless or wired communication means to the control device (14) which is configured to analyse the sensor data, **characterized in that** the at least one distance sensor (32) is configured to determine the position of the counter cutter carrier (23) relative to the drum housing (20) and comprises at least two sensor components (33, 34), wherein one sensor component (33, 34) is disposed on the drum housing (20) and the other sensor component (33, 34) is associated with the counter cutter carrier (23).

## Revendications

1. Récolteuse-hacheuse-chargeuse (1) comprenant un dispositif hacheur (6) doté d'un tambour porte-couteaux (7) sur lequel sont placés des couteaux de hachage (8), le tambour porte-couteaux (7) étant entouré sur certaines parties par un carter de tambour (20), et doté d'un contre-couteau (9) qui coopère avec les couteaux de hachage (8) et est fixé de manière amovible à un support de contre-couteau (23), sachant qu'il est prévu un dispositif de commande (14) et un dispositif de réglage (30) qui présente au moins un actionneur (21) et à l'aide duquel le contre-couteau (9) peut être rapproché des couteaux de hachage (8), ce qui a pour effet de régler la dimension d'un intervalle entre le contre-couteau (9) et les couteaux de hachage (8), et sachant que le dispositif de réglage (30) comporte au moins un capteur de distance (32) qui est destiné à détecter une distance entre le contre-couteau (9) et le carter de tambour (20) et qui fonctionne par contact ou sans contact et est relié par un moyen de communication à fil ou sans fil au dispositif de commande (14) qui est conçu pour l'évaluation des données de capteur, **caractérisée en ce que** le capteur de distance (32), au nombre d'au moins un, est conçu pour déterminer la position du support de contre-couteau (23) par rapport au carter de tambour (20) et comporte au moins deux composants de capteur (33, 34), l'un des composants de capteur (33, 34) étant disposé sur le carter de tambour (20) et l'autre composant de capteur (33, 34) étant associé au support de contre-couteau (23).

2. Récolteuse-hacheuse-chargeuse (1) selon la revendication 1, **caractérisée en ce que** le support de contre-couteau (23) est monté avec possibilité de pivotement sur des paliers de pivotement (27) disposés avec leurs axes parallèlement à l'axe de rotation (29) du tambour porte-couteaux (7), sachant que deux bras de levier (24) opposés l'un à l'autre se raccordent au support de contre-couteau (23), côté extrémités, et s'étendent sensiblement dans la direction verticale par rapport au support de contre-couteau (23).

3. Récolteuse-hacheuse-chargeuse (1) selon la revendication 2, **caractérisée en ce que** l'autre composant de capteur (33, 34) est disposé sur le bras de levier (24) adjacent au composant de capteur (33, 34) placé sur le carter de tambour (20), ou sur le palier de pivotement (27) adjacent.

4. Récolteuse-hacheuse-chargeuse (1) selon une des revendications précédentes, **caractérisée en ce que** le capteur de distance (32), au nombre d'au moins un, présente au moins un dispositif de protection (61) qui entoure au moins certaines parties de l'un des composants de capteur (33, 34).

5. Récolteuse-hacheuse-chargeuse (1) selon la revendication 4, **caractérisée en ce que** le dispositif de protection (61) est réalisé sous forme d'enveloppe ou de boîtier en matière plastique.

6. Récolteuse-hacheuse-chargeuse (1) selon la revendication 4 ou 5, **caractérisée en ce que** le dispositif de protection (61) est réalisé sous forme d'élément formant châssis ou de brosse.

7. Récolteuse-hacheuse-chargeuse (1) selon une des revendications précédentes, **caractérisée en ce qu'**est associé au capteur de distance (32), au nombre d'au moins un, un dispositif de nettoyage (58) qui est conçu pour maintenir les composants de capteur (33, 34) sensiblement dégagés de poussière produite lors d'une opération d'affûtage.

8. Récolteuse-hacheuse-chargeuse (1) selon la revendication 7, **caractérisée en ce que** le dispositif de commande (14) est conçu pour activer automatiquement le dispositif de nettoyage (58) en fonction d'au moins un paramètre, aux fins d'éliminer la poussière produite par une opération d'affûtage.

9. Récolteuse-hacheuse-chargeuse (1) selon une des revendications précédentes, **caractérisée en ce que** le dispositif de commande (14) comprend une unité d'entrée-sortie (18) qui est conçue pour saisir une valeur pour la dimension de l'intervalle devant être respectée, qui peut être vérifiée par le capteur de distance (32), au nombre d'au moins un.

10. Récolteuse-hacheuse-chargeuse (1) selon une des revendications précédentes, **caractérisée en ce que** le dispositif de commande (14) comprend une unité de calcul (16) et une unité de mémoire (15) dans laquelle sont enregistrés au moins deux procédés de réglage sélectionnables en vue de l'exécution automatique d'une opération de réglage pour le réglage du contre-couteau (9), procédés qui sont exécutés par l'unité de calcul (16).

11. Récolteuse-hacheuse-chargeuse (1) selon la revendication 10, **caractérisée en ce que** sont enregistrés dans l'unité de mémoire (15), en tant que procédés de réglage sélectionnables, un procédé « Rapide », un procédé « Précis », un procédé « Optimisation de l'usure » et/ou un procédé « Manuel ».

12. Récolteuse-hacheuse-chargeuse (1) selon la revendication 11, **caractérisée en ce que** le dispositif de commande (14) est conçu pour activer le dispositif de réglage (30) dans le procédé de réglage « Précis », de manière à ce que se règle entre le contre-couteau (9) et le tambour porte-couteaux (7), une dimension d'intervalle parallèle la plus petite possible qui est basée sur une consigne et est donnée notamment par un opérateur ou le dispositif de commande (14).

13. Récolteuse-hacheuse-chargeuse (1) selon la revendication 11 ou 12, **caractérisée en ce que** le dispositif de commande (14) est conçu pour activer le dispositif de réglage (30) dans le procédé de réglage « Rapide », de manière à ce qu'une opération de réaffûtage des couteaux de hachage (8) et/ou du contre-couteau (9) soit suivie d'une opération de réglage simplifiée, sachant que pendant l'opération de réglage simplifiée, le contre-couteau (9) s'approche du tambour porte-couteaux (7) jusqu'à ce qu'il y ait un premier contact d'un couteau de hachage (8), afin de régler ensuite la distance entre le contre-couteau (9) et les couteaux de hachage (8) à une dimension d'intervalle prédéfinie, notamment par l'opérateur, par activation du dispositif de réglage (30).

14. Récolteuse-hacheuse-chargeuse (1) selon une des revendications 11 à 13, **caractérisée en ce que** le dispositif de commande (14) est conçu pour activer le dispositif de réglage (30) dans le procédé de réglage « Manuel », de manière à ce qu'un réglage manuel du contre-couteau (9) puisse être effectué à l'aide d'un gabarit ou d'un outil.

15. Récolteuse-hacheuse-chargeuse (1) selon une des revendications précédentes, **caractérisée en ce que** le dispositif de commande (14) est conçu pour effectuer un préréglage du contre-couteau (9) en fonction du type de produit à récolter et/ou lors d'un changement d'outil frontal.

16. Récolteuse-hacheuse-chargeuse (1) selon une des revendications précédentes, **caractérisée en ce que** le dispositif de commande (14) est conçu pour effectuer la détermination de la position du support de contre-couteau (23) en continu au cours du service de récolte.

17. Récolteuse-hacheuse-chargeuse (1) selon la revendication 16, **caractérisée en ce que** le dispositif de commande (14) est conçu pour déduire une action à exécuter, en fonction de la position du support de contre-couteau (23) déterminée au cours du service de récolte.

18. Récolteuse-hacheuse-chargeuse (1) selon la revendication 17, **caractérisée en ce que** l'action à exécuter est une émission d'un avertissement ou l'arrêt du tambour porte-couteaux (7).

19. Récolteuse-hacheuse-chargeuse (1) selon une des revendications précédentes, **caractérisée en ce que** le dispositif de commande (14) est conçu pour déterminer, après un redémarrage au moins du dispositif hacheur (6), notamment de la récolteuse-hacheuse-chargeuse (1), à l'aide du capteur de distance (32), au nombre d'au moins un, un écart par rapport à la dernière valeur réglée pour la dimension de l'intervalle avant le redémarrage, et pour délivrer celui-ci.

20. Récolteuse-hacheuse-chargeuse (1) selon une des revendications précédentes, **caractérisée en ce que** le dispositif de commande (14) est conçu pour détecter, après un changement d'un outil frontal de ramassage de récolte, une modification de la distance entre le tambour hacheur (7) et le contre-couteau (9) par rapport à une distance déterminée avant le changement, et pour déduire une action en cas de détection d'une modification de la distance.

21. Récolteuse-hacheuse-chargeuse (1) selon la revendication 20, **caractérisée en ce que** l'action est une émission d'un avertissement et/ou l'exécution d'une opération de réglage du contre-couteau (9).

22. Récolteuse-hacheuse-chargeuse (1) selon une des revendications précédentes, **caractérisée en ce que** le dispositif de commande (14) est conçu pour déterminer, en fonction d'une course de réglage parcourue du support de contre-couteau (23), des données d'usure des couteaux de hachage (8) et/ou du contre-couteau (9), et pour les délivrer.

23. Récolteuse-hacheuse-chargeuse (1) selon une des revendications 10 à 22, **caractérisée en ce que** le dispositif de commande (14) est conçu pour déterminer, dans le cadre de l'exécution automatique d'une opération de réglage, un écart de géométrie, notamment un bombement, de la forme du contre-couteau (9) ou de la forme des couteaux de hachage, qui dépasse une valeur de seuil prévue à cet effet.

24. Récolteuse-hacheuse-chargeuse (1) selon une des revendications précédentes, **caractérisée en ce que** le dispositif de commande (14) est conçu pour déterminer un remplacement de couteaux de hachage (8) et/ou du contre-couteau (9) et/ou une modification manuelle du réglage de la dimension de l'intervalle et/ou de la disposition de couteaux de hachage (8) et/ou du contre-couteau (9).

25. Récolteuse-hacheuse-chargeuse (1) selon une des revendications précédentes, **caractérisée en ce que** le dispositif de commande (14) est conçu pour amener le contre-couteau (9) de manière automatique dans une position de rangement et/ou une position d'étalonnage.

26. Procédé pour faire fonctionner une récolteuse-hacheuse-chargeuse (1) comprenant un dispositif hacheur (6) doté d'un tambour porte-couteaux (7) sur lequel sont placés des couteaux de hachage (8), le tambour porte-couteaux (7) étant entouré sur certaines parties par un carter de tambour (20), et doté d'un contre-couteau (9) qui coopère avec les couteaux de hachage (8) et est fixé de manière amovible sur un support de contre-couteau (23), sachant qu'il est prévu un dispositif de réglage (30) qui présente un dispositif de commande (14) et au moins un actionneur (21) et à l'aide duquel le contre-couteau (9) est rapproché des couteaux de hachage (8), ce qui a pour effet de régler la dimension d'un intervalle entre le contre-couteau (9) et les couteaux de hachage (8), et sachant que le dispositif de réglage (30) comporte au moins un capteur de distance (32) qui détecte une distance entre le contre-couteau (9) et le carter de tambour (20) et qui fonctionne par contact ou sans contact et est relié par un moyen de communication à fil ou sans fil au dispositif de commande (14) qui est conçu pour l'évaluation des données de capteur, **caractérisé en ce que** le capteur de distance (32), au nombre d'au moins un, est conçu pour déterminer la position du support de contre-couteau (23) par rapport au carter de tambour (20) et comporte au moins deux composants de capteur (33, 34), l'un des composants de capteur (33, 34) étant disposé sur le carter de tambour (20) et l'autre composant de capteur (33, 34) étant associé au support de contre-couteau (23).
